# EUROPEAN PATENT APPLICATION

(11) **EP 4 517 942 A1**
(43) Date of publication of application: **05.03.2025**
(21) Application number: 23795169.4
(22) Date of filing: 20.04.2023
(51) Int. Cl.: H01M 50/103, H01M 50/627, H01M 50/183

(54) **BATTERY HOUSING, BATTERY CELL, LARGE-CAPACITY BATTERY, AND MANUFACTURING METHOD FOR LARGE-CAPACITY BATTERY**

(30) Priority: 29.04.2022 CN 202210473440; 29.04.2022 CN 202221031476 U; 30.05.2022 CN 202210599290; 29.08.2022 CN 202211041714; 30.09.2022 CN 202211206371; 11.02.2023 CN 202310099626; 11.02.2023 CN 202310099712
(71) Applicant: D-Aus Energy Storage Technology (Xi'an) Co., Ltd, Xi' An, Shaanxi 710075 (CN)
(72) Inventor: LEI, Zhengjun, Xi'an, Shaanxi 710075 (CN); ZHANG, Sanxue, Xi'an, Shaanxi 710075 (CN); HAN, Xiaoyu, Xi'an, Shaanxi 710075 (CN); QIANG, Jian, Xi'an, Shaanxi 710075 (CN); CHEN, Mengqi, Xi'an, Shaanxi 710075 (CN); LIU, Yi, Xi'an, Shaanxi 710075 (CN)
(74) Representative: Zacco GmbH
(86) International application number: PCT/CN2023/089374
(87) International publication number: WO 2023/207736

(57) **Abstract**

The present invention provides a battery housing, a battery cell, a large-capacity battery, and a manufacturing method for the large-capacity battery. The battery housing is provided with a sealing mechanism and an opening communicating with an inner cavity of the battery housing, the sealing mechanism seals the opening, and the sealing mechanism is able to be opened by an external force. The battery housing is simple in structure, an electrolyte between the battery cells may be shared in a convenient operation mode, and a plurality of battery cells are located in a uniform electrolyte system, so that the problem of the performance difference of each battery cell in the large-capacity battery is fully solved.

## Description

### Technical Field

The present invention belongs to the field of batteries, and in particular, to a battery housing, a battery cell, a large-capacity battery, and a manufacturing method for the large-capacity battery.

### Background

Due to the advantages such as high packaging reliability, high system energy efficiency, relatively simple structure, and relatively convenient capacity expansion, a lithium battery is widely used in various fields. In existing lithium battery applications, a plurality of battery cells often need to be connected in parallel to meet the use requirements in scenarios with relatively large capacity. When the plurality of battery cells are connected in parallel to form a large-capacity battery, the overall performance of the large-capacity battery is affected due to uneven performance parameters such as capacity, resistance, and voltage of each battery cell. At the same time, after the parallel-connected battery cells operate for a period of time, the electrolyte consumption of each battery cell is different, so that the performance of each battery cell has a greater difference, resulting in poor uniformity between the battery cells, which further affects the overall performance and service life of the large-capacity battery. Therefore, in order to improve the performance and service life of the large-capacity battery, it is necessary to solve the problem of consistency of each battery cell.

Electrolytes of the plurality of battery cells are circulated with each other, so that the plurality of battery cells are located in a uniform electrolyte system, which may solve the problem of poor consistency caused by different electrolyte consumption of each battery cell. However, how to communicate electrolyte cavities of the plurality of battery cells with an electrolyte cavity of the large-capacity battery is a problem to be solved.

### Summary

Some embodiments of the present invention provide a battery housing, a battery cell, a large-capacity battery, and a manufacturing method for the large-capacity battery. The battery housing is simple in structure, an electrolyte between the battery cells may be shared in a convenient operation mode, and a plurality of battery cells are located in a uniform electrolyte system, so that the problem of the performance difference of each battery cell in the large-capacity battery is solved.

An embodiment of the present invention provides a battery housing. The battery housing is provided with a sealing mechanism and an opening communicating with an inner cavity of the battery housing, the sealing mechanism seals the opening, and the sealing mechanism is able to be opened by an external force.

In an embodiment mode, the sealing mechanism includes a sealing part and a pulling part. The sealing part is arranged corresponding to the opening in a sealed manner. The pulling part is connected to a side surface of one side, away from the opening, of the sealing part. When the pulling part is pulled by an external force, the sealing part is integrally separated from the opening, or an opening is formed in the sealing part. In general, the sealing mechanism seals the opening, which may prevent the inside of the battery cell from being affected, and the sealing mechanism may play a role in blocking the opening to form an explosion venting film. When the battery cells form a large-capacity battery and an electrolyte needs to be injected into the large-capacity battery having a shared pipeline, the openings in all the battery cells may be opened only by adopting an external force for pulling, and then the electrolyte is injected into the large-capacity battery through the shared pipeline, so that the electrolyte is shared by each battery cell in the large-capacity battery. At the same time, because the sealing mechanism is ingeniously arranged at the opening of the battery cell, no additional holes or channels need to be additionally arranged on the battery cell, which is not only simple in structure, but also easy to manufacture and assemble.

In an embodiment mode, the sealing part is provided with a circle of notches, an area circled by the notches is a weak area, and the weak area is provided with the pulling part. When the pulling part is pulled by an external force, the weak area is torn along the notches to form an opening. By arranging the weak area, the opening is easily formed through the rupture of the notches when the pulling part is pulled, which facilitates operation and reduces difficulty.

In an embodiment mode, the weak area is drop-shaped, circular, or racetrack-shaped. A cross section of the notch is U-shaped or V-shaped, the weak area is located at a center of the sealing part, and the pulling part is eccentrically arranged on the weak area.

In an embodiment mode, the battery housing is provided with a pipeline extending in a thickness direction of the battery housing, and the pipeline covers the opening.

In an embodiment mode, the battery housing includes an upper cover plate, a lower cover plate, and a cylinder. The upper cover plate is provided with a positive terminal and a negative terminal, and the opening is formed in the lower cover plate.

In an embodiment mode, the sealing mechanism includes a fixing part and an electrolyte injection part. The fixing part is of a sheet-shaped structure provided with a through hole, so as to fix the sealing mechanism to the battery housing. The electrolyte injection part is of a hollow tubular structure provided with an open end and a closed end, the open end is fixed to the through hole, so as to communicate the electrolyte injection part with the inner cavity of the battery housing, and the closed end is opened by an external force to inject the electrolyte into the inner cavity of the battery housing.

In an embodiment mode, one side, facing away from the electrolyte injection part, of the through hole is provided with a protruding positioning part, the electrolyte injection part is provided with a weak groove in a circumferential direction thereof, and the weak groove is arranged at one end, away from the fixing part, of the electrolyte injection part.

Another embodiment of the present invention further provides a battery cell, including the above battery housing.

In an embodiment mode, the battery housing is internally provided with an electrode assembly. The battery housing is provided with a pipeline, the pipeline extends in a thickness or width direction of the battery cell, a side wall of the pipeline is provided with a channel, and an opening of the battery housing corresponding to the channel is provided with a sealing mechanism.

In an embodiment mode, the battery housing is internally provided with a plurality of pouch batteries connected in parallel, and housings of the plurality of pouch batteries are each provided with an opening. The battery housing is provided with a pipeline, the pipeline extends in a thickness or width direction of the battery cell, a side wall of the pipeline is provided with a channel, and an opening of the battery housing corresponding to the channel is provided with a sealing mechanism.

In an embodiment mode, the battery housing is internally provided with a square battery, and a housing of the square battery is provided with an opening. The battery housing is provided with a pipeline, the pipeline extends in a thickness or width direction of the battery cell, a side wall of the pipeline is provided with a channel, and an opening of the battery housing corresponding to the channel is provided with a sealing mechanism, or the opening of the housing of the square battery is provided with a sealing mechanism.

Another embodiment of the present invention further provides a large-capacity battery, including a plurality of the above battery cells. The plurality of battery cells are connected in parallel and intercommunication of electrolytes is achieved through a shared pipeline.

In an embodiment mode, pipelines on two adjacent battery cells are spliced by a connecting piece to form the shared pipeline, and an inside of the connecting piece is hollow and through.

The present invention further provides a manufacturing method for the above large-capacity battery, including the following steps: fixing a plurality of battery cells having sealing mechanisms into a group, where the plurality of battery cells in the group have a shared pipeline; using a port at any end of the shared pipeline as an operation port, and opening the sealing mechanisms on all the battery cells by using an unpacking tool, so that the shared pipeline penetrates through inner cavities of all the battery cells; and injecting an electrolyte into the shared pipeline, so that the electrolyte enters the inner cavity of each battery cell, and then all the battery cells are located in the same electrolyte system.

In an embodiment mode, the unpacking tool includes a slender rod. The slender rod is provided with a cutting part, the cutting part is configured to cut a sealing end of the sealing mechanism, the cutting part is a hollow circular tube with an open end, and the open end of the hollow circular tube is provided with a serrated blade, or the open end of the hollow circular tube is wedge-shaped.

In an embodiment mode, the battery housing is enclosed by an upper cover assembly and a housing body, and the housing body is provided with an opening communicating with an inner cavity thereof. The sealing mechanism includes a connecting pipe and a sealing film. The connecting pipe is arranged on the housing body and communicates with the inner cavity of the housing body through the opening. The sealing film is arranged in the opening of the housing body or in the connecting pipe to seal the battery housing. The sealing film is opened by an external force or external pressure in the connecting pipe, so that an electrolyte enters the housing body.

In an embodiment mode, the connecting pipe is internally provided with an opening apparatus, and the opening apparatus may move in the connecting pipe under the action of external pressure or a sliding apparatus, so that the opening apparatus opens the sealing film.

In an embodiment mode, one end of the opening apparatus is provided with an ejecting protrusion or an ejecting spike, while the other end thereof is provided with a circular truncated cone.

In an embodiment mode, a side wall of the circular truncated cone of the opening apparatus is provided with a wedge surface, and the wedge surface is configured to cooperate with the sliding apparatus to achieve rapid and accurate movement of the opening apparatus. A side wall of one end, away from the opening, of the connecting piece is provided with a plurality of through holes in a circumferential direction for circumferential injection of the electrolyte, and the opening apparatus is internally provided with a through channel in a moving direction thereof.

Another embodiment of the present invention further provides a battery cell. The battery cell includes an electrode assembly and the above battery housing. The electrode assembly is arranged in the battery housing and is soaked in an electrolyte.

Another embodiment of the present invention further provides a large-capacity battery. The large-capacity battery includes an electrolyte storage pipe and a plurality of the above battery cells. The electrolyte storage pipe communicates with connecting pipes of a plurality of battery housings, the electrolyte storage pipe is internally provided with a sliding apparatus, the sliding apparatus is a sliding rod, and the sliding rod is configured to push an opening apparatus to slide in the connecting pipes, so that the opening apparatus opens a sealing film.

In an embodiment mode, the electrolyte storage pipe is provided with an electrolyte injection apparatus, the electrolyte injection apparatus is an electrolyte injection valve, the electrolyte storage pipe is further provided with an explosion venting apparatus to discharge flue gas generated when thermal runaway of the large-capacity battery is out of control, and the explosion venting apparatus is an explosion venting valve.

In an embodiment mode, the sealing mechanism includes a sealing layer and a magnetic apparatus. The sealing layer is arranged on a housing body of the battery housing and seals the opening. The magnetic apparatus is connected to the sealing layer and is located on one side, away from the housing body, of the sealing layer. When the magnetic apparatus is attracted by a magnetic piece, at least part of the sealing layer is separated from the housing body, and the opening is opened, so that an electrolyte is injected through the opening.

In an embodiment mode, the sealing layer is connected to the housing body through an adhesive, or the sealing layer is a self-adhesive tape.

In an embodiment mode, the magnetic apparatus is a magnetic rod, which is connected to the sealing layer by winding, or the magnetic apparatus is a magnetic block, which is fixedly connected to the sealing layer by bonding.

In an embodiment mode, the sealing mechanism is a hot melt layer, a housing body of the battery housing is provided with an opening communicating with an inner cavity thereof, the hot melt layer seals the opening, the hot melt layer is provided with a heating apparatus, and when the hot melt layer is melted by heat, the opening is opened, so that an electrolyte is injected through the opening.

In an embodiment mode, the heating apparatus is one of a heating wire, a heating plate, or a heater band, the heating apparatus is connected to an external power source through a conductive wire, the hot melt layer is a hot melt tape, and the hot melt tape seals the opening.

Another embodiment of the present invention further provides a battery cell. The battery cell includes an electrode assembly, an electrolyte, and the above battery housing. The electrode assembly and the electrolyte are both arranged in the battery housing, and the electrode assembly is soaked in the electrolyte.

Another embodiment of the present invention further provides a large-capacity battery. The large-capacity battery includes a battery box and a plurality of the above battery cells. The battery cells are arranged in the battery box, and an electrolyte in the battery box and an electrolyte in a battery housing are circulated with each other through an opening.

In an embodiment mode, the battery box is provided with an electrolyte injection and explosion venting port, and the electrolyte injection and explosion venting port is provided with an explosion venting valve.

Compared with the related art, the technical solution of the present invention has the following advantages.
1. The present invention discloses the battery housing, in which the opening of the battery housing is provided with the sealing mechanism that may be opened by an external force, so that the opening is opened and filled with the electrolyte to achieve intercommunication of the electrolyte of each battery cell connected by the pipeline, thereby fundamentally solving the problem of large difference of each battery cell in the large-capacity battery caused by the electrolyte difference.
2. In the present invention, the opening of the battery housing is provided with the sealing mechanism with the tubular electrolyte injection part and the sheet-shaped fixing part, the sealing mechanism passes through the channel arranged on the pipeline and extends into the pipeline, and when the large-capacity battery is formed, the closed ends of the electrolyte injection parts are uniformly shoveled off or sequentially shoveled off by a special tool and the residual parts are recovered at the same time, which not only improves the opening efficiency of the opening, but also ensures that all the sealing mechanisms form the opening at the same time. In addition, the sealing mechanism is simple in structure, good in effect, and high in one-time penetration rate. The sealing mechanism is made of thin metal or plastic, is mature in process and low in cost, has diversified use scenarios, and is able to be suitable for the battery cell internally provided with the electrode assembly, the plurality of pouch batteries with the openings or the square battery with the opening.
3. In the present invention, the battery housing is provided with the opening, the opening is provided with the connecting pipe, the opening of the connecting pipe or the housing body is internally provided with the sealing film, and when the single battery cell operates, the sealing film seals the battery housing, so that the electrolyte in the battery housing is isolated from the external air. When the plurality of battery cells are connected in parallel to form the large-capacity battery, the sealing film is opened by an external force or external pressure in the connecting pipe, and the electrolyte is injected, so as to achieve intercommunication of the electrolytes in the plurality of battery cells, so that the plurality of battery cells are located in the uniform electrolyte system, thereby greatly improving the consistency of the performance of each battery cell. At the same time, in this way, electrolyte replenishing after precharge and grading is also facilitated, the service life of the large-capacity battery is prolonged, the operability is strong, economy and practicability are achieved, and the production efficiency and yield rate of the large-capacity battery are improved.
4. In the present invention, the sealing film is opened by an external force or external pressure in the connecting pipe. In this way, the sealing film is able to be opened without contacting with the air, which may effectively prevent the battery housing from contacting with water vapor in the air when being opened. The operation method is simple and reliable, good in isolation of the water vapor, free of other manufacturing processes, easy to operate, able to improve the performance and the yield rate of the large-capacity battery, simple in structure, convenient to mount, and strong in universality.
5. In the present invention, the battery housing is provided with the sealing layer and the magnetic apparatus, when the large-capacity battery is assembled by using the plurality of battery cells, the electrolyte in the battery box and the electrolyte in the battery cell is able to be circulated with each other through the opening, so that the performance of the electrolyte inside the entire large-capacity battery is uniform and consistent, electrolyte replenishing after precharge and grading is also facilitated, the service life of the large-capacity battery is prolonged, the operability is strong, economy and practicability are achieved, and the production efficiency and yield rate of the large-capacity battery are improved.
6. In the present invention, after the battery cells are connected in parallel to form the group, each battery cell is subjected to hole opening and rapid sealing and moved into the cavity of the battery box, degumming is performed by using the magnetic attraction, and then the channel between each battery cell and the environment in the battery box is released and unblocked, so that each battery cell is soaked in the electrolyte in the environment in the battery box, thereby greatly improving the consistency of the energy storage performance of each battery cell and prolonging the service life of each battery cell. At the same time, this arrangement may effectively prevent the battery housing from contacting with the water vapor in the air when being opened, and the operation method is simple and reliable, good in isolation of the water vapor, free of other manufacturing processes of the battery, and easy to operate.
7. The manufacturing method provided in the present invention is configured to manufacture the large-capacity battery. The large-capacity battery is provided with the shared pipeline, so that all the single batteries in the large-capacity battery are located in the same electrolyte system, which weakens the adverse effect caused by the cask effect, ensures the uniformity of the electrolyte of each single battery in the large-capacity battery, and prolongs the cycle life. At the same time, the improvement of uniformity also reduces the difference of the heat of each single battery, so that each single battery may basically maintain balanced heating, thereby reducing the probability of thermal runaway caused by excessive heat of individual batteries.
8. The shared pipeline may also replenish the electrolyte for the large-capacity battery, which further prolongs the service life of the large-capacity battery. Before the large-capacity battery is formed, the battery cell is provided with the sealing mechanism with the tubular injection part and the sheet-shaped fixing part, and the tubular injection part is hidden in the shared pipeline, so that when the large-capacity battery is formed, one side, close to the closed end, of the electrolyte injection part is uniformly shoveled off by the unpacking tool and the residual part is recovered by the tool at the same time, which not only improves the efficiency of penetrating through the opening, but also ensures that the closed ends of all the sealing mechanism are detached at the same time. In addition, the sealing mechanism is simple in structure, good in effect, and high in one-time penetration rate. The sealing mechanism is made of thin metal or plastic, is mature in process and low in cost, has diversified use scenarios, and is able to be suitable for the battery cell internally provided with the electrode assembly, the plurality of pouch batteries with the openings or the square battery with the opening. The present invention may prolong the cycle life of the large-capacity battery and improve the safety of the large-capacity battery.

### Brief Description of the Drawings

Fig. 1 is a first schematic structural diagram of a sealing mechanism in Embodiment 1 of the present invention.
Fig. 2 is a second schematic structural diagram of a sealing mechanism in Embodiment 1 of the present invention.
Fig. 3 is a first schematic structural diagram of a battery housing in Embodiment 1 of the present invention.
Fig. 4 is a second schematic structural diagram of a battery housing in Embodiment 1 of the present invention.
Fig. 5 is a first schematic diagram of a mounting structure of a sealing mechanism and a battery housing in Embodiment 1 of the present invention.
Fig. 6 is a second schematic diagram of a mounting structure of a sealing mechanism and a battery housing in Embodiment 1 of the present invention.
Fig. 7 is a schematic structural diagram of a battery cell in Embodiment 2 of the present invention.
Fig. 8 is a first schematic structural diagram of a large-capacity battery in Embodiment 2 of the present invention.
Fig. 9 is a second schematic structural diagram of a large-capacity battery in Embodiment 2 of the present invention.
Fig. 10 is a first schematic structural diagram of a sealing mechanism in Embodiment 3 of the present invention.
Fig. 11 is a second schematic structural diagram of a sealing mechanism in Embodiment 3 of the present invention.
Fig. 12a is a third schematic structural diagram of a sealing mechanism in Embodiment 3 of the present invention.
Fig. 12b is a fourth schematic structural diagram of a sealing mechanism in Embodiment 3 of the present invention.
Fig. 13a is a first schematic structural diagram of a battery cell A in Embodiment 4 of the present invention.
Fig. 13b is a second schematic structural diagram of a battery cell A in Embodiment 4 of the present invention.
Fig. 13c is a first schematic diagram of a sectional structure of a lower cover plate of a battery cell A in Embodiment 4 of the present invention.
Fig. 13d is a first schematic structural diagram of a battery cell A and a connecting piece in Embodiment 4 of the present invention.
Fig. 14a is a second schematic diagram of a sectional structure of a lower cover plate of a battery cell A in Embodiment 4 of the present invention.
Fig. 14b is a second schematic structural diagram of a battery cell A and a sealing mechanism in Embodiment 4 of the present invention.
Fig. 15 is a schematic structural diagram of a battery cell B in Embodiment 4 of the present invention.
Fig. 16 is a schematic structural diagram of a battery cell C in Embodiment 4 of the present invention.
Fig. 17 is a schematic structural diagram of a battery cell D in Embodiment 4 of the present invention.
Fig. 18 is a schematic flowchart of a manufacturing method for a large-capacity battery in Embodiment 5 of the present invention.
Fig. 19 is a schematic structural diagram of splicing a battery cell and a shared pipeline in Embodiment 5 of the present invention.
Fig. 20a is a schematic structural diagram of an unpacking tool in Embodiment 5 of the present invention.
Fig. 20b is a first schematic structural diagram of a cutting part of an unpacking tool in Embodiment 5 of the present invention.
Fig. 20c is a second schematic structural diagram of a cutting part of an unpacking tool in Embodiment 5 of the present invention.
Fig. 21 is a schematic structural diagram of a large-capacity battery in Embodiment 5 of the present invention.
Fig. 22 is a first schematic diagram of a battery housing in Embodiment 6 of the present invention.
Fig. 23 is a second schematic diagram of a battery housing in Embodiment 6 of the present invention.
Fig. 24 is a schematic diagram of a sealing film provided with a notch in Embodiment 6 of the present invention.
Fig. 25 is a schematic diagram of a large-capacity battery in Embodiment 6 of the present invention.
Fig. 26 is a schematic structural exploded view of a large-capacity battery in Embodiment 7 of the present invention.
Fig. 27 is a schematic diagram of cooperation between a connecting pipe and an opening apparatus in Embodiment 7 of the present invention.
Fig. 28 is a schematic structural diagram of an opening apparatus in Embodiment 8 of the present invention.
Fig. 29 is a schematic diagram of a large-capacity battery in Embodiment 8 of the present invention.
Fig. 30 is a schematic structural diagram of a large-capacity battery in Embodiment 9 of the present invention.
Fig. 31 is a schematic diagram of a plurality of battery cells connected in parallel in Embodiment 9 of the present invention.
Fig. 32 is a schematic diagram of a battery housing provided with a rectangular opening in Embodiment 9 of the present invention.
Fig. 33 is a schematic diagram of a plurality of battery cells connected in parallel in Embodiment 9 of the present invention.
Fig. 34 is a schematic diagram of each battery housing soaked in an electrolyte in Embodiment 9 of the present invention.
Fig. 35 is a schematic structural diagram of a battery housing in Embodiment 10 of the present invention.
Fig. 36 is a schematic structural diagram of a plurality of battery cells connected in parallel in Embodiment 10 of the present invention.
Fig. 37 is a schematic structural diagram of a large-capacity battery in Embodiment 10 of the present invention.
Fig. 38 is an enlarged view of a local structure of a large-capacity battery in Embodiment 10 of the present invention.

Reference signs: 11-Sealing mechanism; 111-Sealing part; 112-Pulling part; 1111-Notch; 1112-Weak area; 12-Battery housing; 121-Opening; 122-Pipeline; 1221-Connecting port; 1231-Upper cover Plate; 1232-Lower cover plate; 1233-Cylinder; 124-Terminal; 125-Connecting piece; 1251-Connecting nozzle; 1261-First battery mounting seat; 1262-Second battery mounting seat; 1263-Battery fixing frame; 1264-Mounting piece; 128-Explosion venting assembly; 129-Blocking piece; 21-Upper cover plate; 22-Lower cover plate; 221-Opening; 2211-Mounting position; 23-Cylinder; 231-First battery assembly seat; 232-Second battery assembly seat; 233-Heat radiating groove; 234-Reinforcing rib; 24-Pipeline; 241-Connecting port; 242-Channel; 25-Terminal; 250-Through groove; 26-Sealing mechanism; 261-Fixing part; 262-Electrolyte injection part; 263-Positioning part; 264-Weak groove; 2641-Weak section; 27-Connecting piece; 271-Connecting nozzle; 28-Commercially available square battery; 29-Commercially available pouch battery; 210-Opening; 662-Blocking piece; 663-Explosion venting assembly; 67-Connecting pipe; 671-Connecting nozzle; 691-Slender rod; 692-Cutting part; 6921-Serrated blade; 693-Handle; 610-Battery cell; 31-Housing body; 32-Upper cover assembly; 33-Connecting pipe; 34-Sealing film; 35-Opening apparatus; 36-Electrolyte storage pipe; 37-Sliding rod; 38-Explosion venting apparatus; 311-Opening; 331-Through hole; 341-Notch; 351-Wedge surface; 352-Positioning boss; 41-Battery housing; 42-Battery cell; 43-Battery box; 44-Magnetic piece; 411-Housing body; 412-Sealing layer; 413-Magnetic apparatus; 414-Opening; 51-Housing body; 52-Hot melt layer; 53-Opening; 54-Heating apparatus; 55-Electrode assembly; 56-Battery box; 57-Electrolyte injection and explosion venting port; 58-Conductive wire.

### Detailed Description of the Embodiments

In order to make the purposes, technical solutions and advantages of the present invention clearer, the present invention will be further described below in detail in conjunction with the accompanying drawings and embodiments. It is to be understood that that the specific embodiments described herein are only used to illustrate the present invention, but are not intended to limit the present invention.

### Embodiment 1

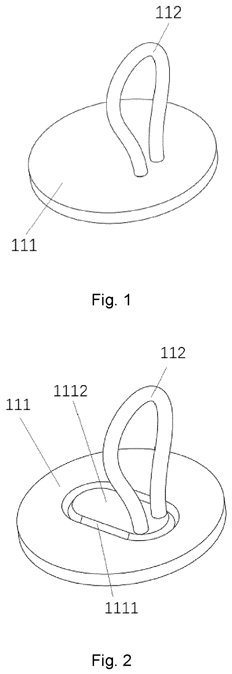

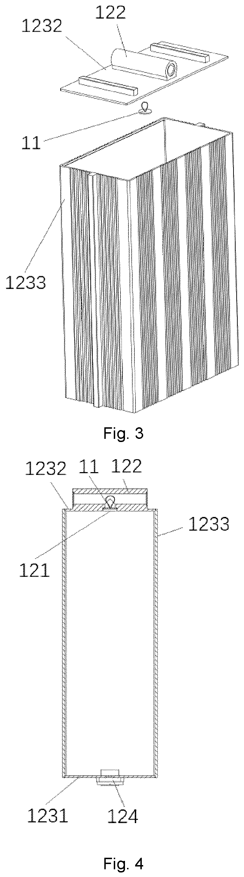

As shown in Fig. 1 to Fig. 5, the present embodiment provides a battery housing. The battery housing is provided with an opening 121 communicating with an inner cavity thereof, and a pipeline 122 extending in a thickness direction of the battery housing, the pipeline 122 covers the opening 121, the pipeline 122 penetrates through the opening 121, the opening 121 is provided with a sealing mechanism 11, and the sealing mechanism 11 seals the opening 121 in the battery housing. The opening 121 of the battery housing is provided with the sealing mechanism which is detachable when a pulling part 112 is pulled by an external force, so that the opening 121 is opened and filled with an electrolyte, thereby fundamentally solving the problem of large difference in a large-capacity battery caused by different electrolyte amounts or components.

In some implementations, the above battery housing includes an upper cover plate 1231, a lower cover plate 1232, and a cylinder 1233. The upper cover plate 1231 is provided with a terminal 124, and the terminal 124 includes a positive terminal and a negative terminal. The opening 121 is formed in the lower cover plate 1232. The opening 121 is formed in the lower cover plate 1232, which is conducive to the assembly of the large-capacity battery, so that the volume of the large-capacity battery is small, and the use amount of the electrolyte is small when the electrolyte is added, which is conductive to sharing and improving the consistency of the battery. The lower cover plate 1232 and the pipeline 122 are integrally formed aluminum extrusions, and the lower cover plate 1232 and the pipeline 122 are machined in the form of extrusion. The process is simple, the cost is low, and the use effect is good.

As shown in Fig. 1, the sealing mechanism 11 in the present embodiment includes a sealing part 111 and the pulling part 112. The sealing part 111 is arranged corresponding to the opening 121 in a sealed manner. The pulling part 112 is connected to a side surface of one side, away from the opening 121, of the sealing part 111. When the pulling part 112 is pulled by an external force, the sealing part 111 is integrally separated from the opening 121, or an opening is formed in the sealing part 111. The sealing mechanism 11 at the opening 121 is pulled by an external force to open the opening 121, so that the electrolyte in each battery cell connected by the pipeline 122 on the large-capacity battery is shared. The use of this structure solves the problem that the performance and life of the large-capacity battery are affected due to the inconsistency of the electrolyte in each battery cell. At the same time, because the sealing mechanism 11 is ingeniously arranged at the opening 121 of the battery cell, no additional holes or channels need to be additionally arranged on the battery cell, which is not only simple in structure, but also easy to manufacture and assemble.

As shown in Fig. 2, in some implementations, the sealing part 111 is provided with a circle of notches 1111, an area circled by the notches 1111 is a weak area 1112, and the weak area 1112 is provided with the pulling part 112. When the pulling part 112 is pulled by an external force, the weak area 1112 is torn along the notches 1111 to form the opening. By arranging the weak area 1112, the opening is easily formed through the rupture of the notches 1111 when the pulling part 112 is pulled, which facilitates operation and reduces the difficulty in forming the opening. The notches 1111 are based on being able to form the opening and the pulling part 112 is arranged in the notches 1111 and is eccentrically arranged, close to a line of the notches 1111.

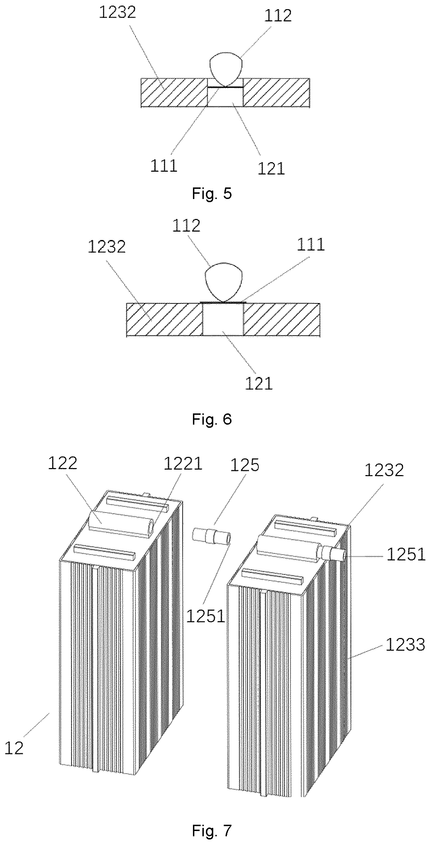

In some implementations, as shown in Fig. 5, the sealing part 111 is arranged in the opening 121 by bonding or welding, or as shown in Fig. 6, the sealing part 111 covers the opening 121 by bonding or welding. The sealing part 111 is able to be conveniently and simply fixed to the opening 121 by welding or bonding, with low cost, high efficiency, and good effect. The sealing part 111 is a Polypropylene (PP) plastic sheet, a Polyethylene (PE) plastic sheet, or an aluminum sheet. The sealing part 111 made of the PP plastic sheet, the PE plastic sheet, or the aluminum sheet has low cost, does not react with the electrolyte, is not dissolved by the electrolyte, and has a good sealing effect when welded or bonded.

In some implementations, the weak area 1112 is drop-shaped, circular, or racetrack-shaped. A cross section of the notch 1111 is U-shaped or V-shaped. The U-shaped or V-shaped notch 1111 is easy to machine and good in use effect. The drop-shaped weak area 1112 is easy to tear, and the circular and racetrack-shaped weak areas 1112 are easy to machine. In order to ensure that all the battery cells is able to be opened smoothly, it is usually preferred to use a teardrop shape as the shape of the weak area 1112. The weak area 1112 is located at a center of a body of the sealing part 111. The weak area 1112 is located at a center of the body of the sealing part 111, which is conducive to machining operations. The area occupied by the weak area 1112 is increased as much as possible, so that the formed opening 121 is relatively large, which is conducive to improving the electrolyte injection speed and efficiency.

In some implementations, the pulling part 112 is eccentrically arranged on the weak area 1112. Compared with being arranged at a center, the eccentric arrangement of the pulling part 112 is conducive to improving the tearing efficiency, so that the operation is simple and convenient.

### Embodiment 2

As shown in to Fig. 7, the present embodiment provides a battery cell, including the battery housing described in Embodiment 1. The battery housing 12 is internally provided with an electrode assembly or a plurality of pouch batteries with the openings, and a housing of the pouch battery is provided with the opening for electrolyte injection. The battery housing 12 includes an upper cover plate 1231, a lower cover plate 1232, a cylinder 1233, and a pipeline 122. The upper cover plate 1231 is provided with a positive terminal and a negative terminal. The lower cover plate 1232 is provided with an opening 121, and is further provided with a pipeline 122 covering the opening 121 and extending in a thickness direction of the battery housing 12. The opening 121 is circular or may be an elongated through hole. The opening 121 is formed in the lower cover plate, which is conducive to the assembly of the large-capacity battery, so that the volume of the large-capacity battery is small, and the use amount of the electrolyte is small when the electrolyte is added. The lower cover plate and the pipeline are integrally formed aluminum extrusions. The lower cover plate and the pipeline are machined in the form of extrusion. The process is simple, the cost is low, and the use effect is good.

As shown in Fig. 7, Fig. 8, and Fig. 9, the present embodiment further provides a large-capacity battery, including a plurality of the above battery cells. The pipelines 122 between the battery cells are connected to each other through a connecting piece 125. The external dimension of the connecting piece 125 is comparable to that of the pipeline 122, which helps to improve the stability of the connection between the pipelines 122. The connecting piece 125 includes two connecting nozzles 1251, both ends of the pipeline 122 being provided with connecting ports 1221, and the connecting nozzles 1251 being embedded in the connecting ports 1221 for sealing connection. Or the connecting piece 125 includes two connecting ports, both ends of the pipeline 122 being provided with connecting nozzles, and the connecting nozzles being embedded in the connecting ports for sealing connection. The shape of the connecting nozzle 1251 is preferably slightly tapered, which facilitates insertion into the connecting port 1221. Preferably, the connecting nozzle 1251 is in interference fit with the connecting port 1221, the connecting nozzle 1251 is riveted to the connecting port 1221, or the connecting nozzle 1251 and the connecting port 1221 are in threaded connection or bonded. The opening 121 is provided with a sealing mechanism 11, and the sealing mechanism 11 is configured to protect the electrode assembly or the pouch battery with the opening on the housing from contacting with the air before battery formation and grading, or to serve as an explosion venting film. When the large-capacity battery is formed, the sealing mechanism 11 is opened after a pulling part 112 is pulled by an external force, so that the sealing part 111 forms the opening 121 or the opening 121 is at least partially exposed to allow the electrolyte to enter the battery housing 12, thereby achieving the effect of intercommunication of the electrolytes of the plurality of battery cells.

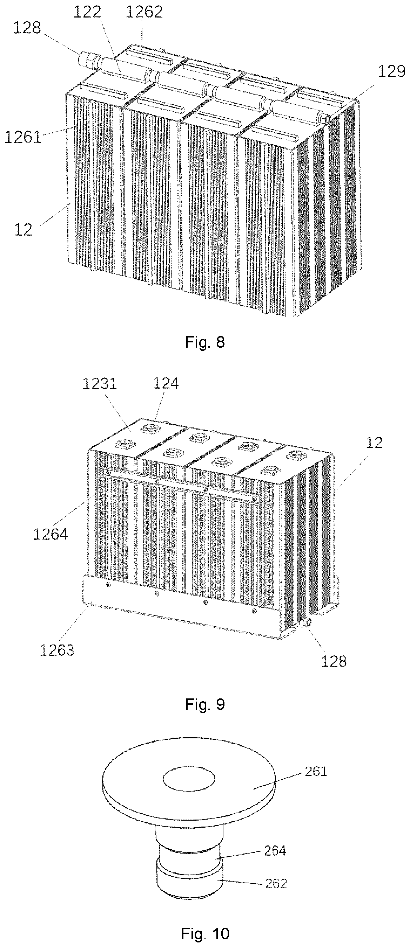

As shown in Fig. 8 and Fig. 9, when the large-capacity battery is mounted, each battery cell is fixedly mounted on a battery fixing frame 1263 through a first battery mounting seat 1261 and a second battery mounting seat 1262, and is connected through a mounting piece 1264, which facilitates carrying and fixing. One end of the connected pipeline 122 is provided with an explosion venting assembly 128, while the other end thereof is provided with a blocking piece 129. The explosion venting assembly 128 is used as an explosion venting port for the large-capacity battery. After being disassembled, the explosion venting assembly 128 is configured to inject the electrolyte to inject, replenish or replace the electrolyte for the large-capacity battery.

In the present embodiment, the battery cells are spliced by the pipelines 122 on the battery housing 12 to form a shared electrolyte channel for the large-capacity battery, and one end of the shared electrolyte channel is provided with an electrolyte injection port. After the pipelines 122 are spliced to form the shared electrolyte channel, the electrolyte injected through the electrolyte injection port enters the battery housing 12 through the opening 121, so that all the battery cells in the large-capacity battery are located in a uniform electrolyte environment, which may effectively improve the uniformity of each battery cell in the large-capacity battery. The electrolyte injection port may further be configured to replenish and replace the electrolyte for the large-capacity battery. When the large-capacity battery is used for more than a certain number of years, the electrolyte is lost. At this time, the electrolyte is extracted and replaced with a new electrolyte or the new electrolyte is directly replenished, which helps to prolong the service life of the large-capacity battery. When used under normal circumstances, the electrolyte injection port is detachably provided with an explosion venting mechanism. If thermal runaway occurs in any battery in the large-capacity battery, thermal runaway flue gas generated is collected into the shared electrolyte channel through the opening 121 and then discharged to a designated place through the explosion venting mechanism for effective treatment, for example, the thermal runaway flue gas is discharged after being cooled and adsorbed, or is ignited.

### Embodiment 3

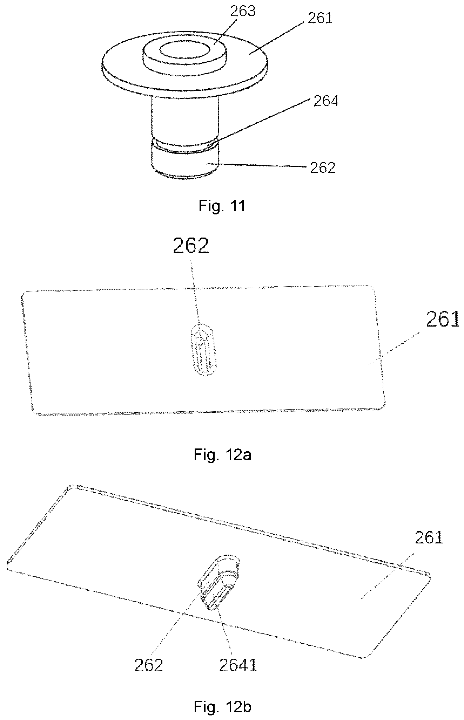

The present embodiment provides a battery housing. The battery housing is provided with an opening, and a sealing mechanism seals the opening of the battery housing. As shown in Fig. 10, Fig. 11, Fig. 12a, and Fig. 12b, the sealing mechanism 26 includes a fixing part 261 and an electrolyte injection part 262. The fixing part 261 is of a sheet-shaped structure provided with a through hole, so as to fix the sealing mechanism 26 to the battery housing. In the sealing mechanism 26 in the first form as shown in Fig. 10 and Fig. 11, the through hole is circular, and the fixing part 261 is also of a circular sheet-shaped structure, which extends slightly in a circumferential direction of the through hole, so as to be fixed on the battery housing corresponding to the opening. In the sealing mechanism 26 in the second form as shown in Fig. 12a and Fig. 12b, the through hole is a strip hole, the fixing part 261 is of a rectangular sheet-shaped structure, and the area of the fixing part 261 is relatively large, which is suitable for the battery cell with the opening formed in a lower cover plate 22. The electrolyte injection parts 262 of the sealing mechanisms 26 in the two forms are both of a hollow tubular structure provided with an open end and a closed end, the open end is fixed to the through hole, so as to communicate the electrolyte injection part 262 with an inner cavity of the battery housing, and the closed end is opened by an external force to inject an electrolyte into the inner cavity of the battery housing. An opening manner of the closed end may be that the closed end is cut off from a side surface of the electrolyte injection part 262 with a sharp tool, so that the tubular electrolyte injection part 262 forms a passage with two open ends.

As shown in Fig. 11, in some implementations, in order to facilitate positioning and mounting, one side, facing away from the electrolyte injection part 262, of the through hole is provided with a protruding positioning part 263 in a circumferential direction of the through hole. For example, when being mounted at an opening of a housing of a commercially available square battery, the positioning part 263 may be inserted into the opening of the commercially available square battery to accurately mount the sealing mechanism 26.

As shown in Fig. 10, Fig. 11, Fig. 12a, and Fig. 12b, in some implementations, the electrolyte injection part 262 is provided with a weak groove 264 in a circumferential direction thereof. The purpose of arranging the weak groove 264 is to allow the tool to cut the electrolyte injection part 262 more easily from the weak groove 264, thereby improving the success rate and efficiency of cutting. Preferably, the weak groove 264 is arranged at one end, away from the fixing part 261, of the electrolyte injection part 262, so as to facilitate the cutting of a slender cutting tool with a small diameter from a bottom end of the electrolyte injection part 262. In some implementations, a section, close to the closed end, of the electrolyte injection part 262 may also be designed as a weak section 2641, and the weak section 2641 is conical or thinner than other parts of the electrolyte injection part 262, so as to facilitate cutting.

### Embodiment 4

The present embodiment provides different types of battery cells. The battery cell includes the battery housing provided in Embodiment 3. When the sealing mechanism 26 is fixed to the battery housing, differences are made according to the types of the battery cells. The battery cells A to D are described in detail in the present embodiment.

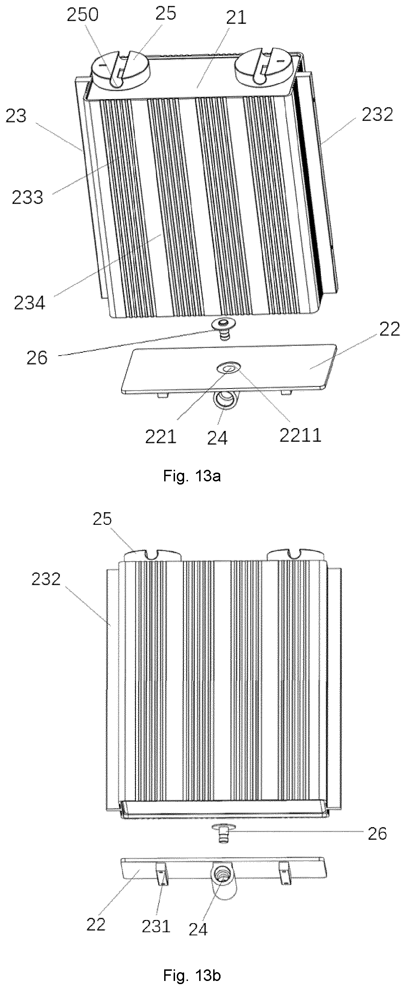

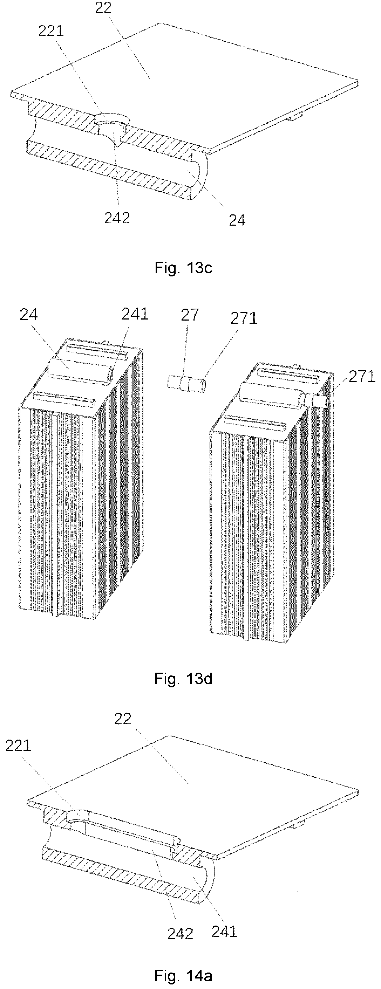

The battery cell A as shown in Fig. 13a, Fig. 13b, and Fig. 13c includes a battery housing. The battery housing includes an upper cover plate 21, a lower cover plate 22, and a cylinder 23. An electrode assembly is placed in the battery housing and filled with an electrolyte. The upper cover plate 21 is provided with a pair of terminals 25, and positive and negative electrodes of the electrode assembly are electrically connected to the positive terminal and the negative terminal respectively. The lower cover plate 22 is provided with an opening 121, and is further provided with a pipeline 24 covering the opening 121 and extending in a thickness direction of the battery cell, and a side wall of the pipeline 24 is provided with a channel 242. As shown in Fig. 13a, the opening 221 and the channel 242 are circular holes, or may be strip holes as shown in Fig. 14a, respectively. In the present embodiment, the pipeline 24 is designed as an integral aluminum extrusion with the lower cover plate 22. At this time, the opening 221 and the channel 242 are combined into one channel, the sealing mechanism 26 in Fig. 10 is mounted in the channel 242, the sealing mechanism 26 is a plastic piece, the fixing part 261 is bonded to an edge of the opening 221 of the lower cover plate 22 extending outward (when a mounting position 2211 is arranged, the fixing part 261 is bonded to the mounting position 2211), the electrolyte injection part 262 extends into the channel 242 and into the pipeline 24, and the opening 221 of the lower cover plate 22 is sealed. The cylinder 23 is an aluminum extrusion, the lower cover plate 22 is fixed to one end of the cylinder 23 by laser welding, the electrode assembly is placed in the cylinder 23, the upper cover plate 21 is fixedly welded to the other end of the cylinder 23, then electrolyte injection is performed on the battery through an electrolyte injection port in the upper cover plate 21, and the electrolyte injection port is sealed to form the battery cell A.

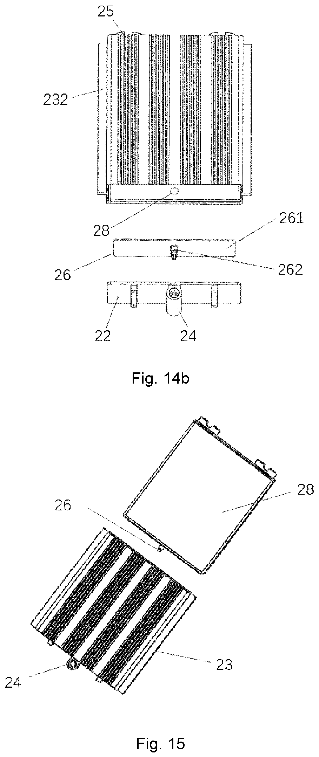

The opening 221 and the channel 242 in the present embodiment are circular holes, and the fixing part 261 and the electrolyte injection part 262 of the sealing mechanism 26 may also be correspondingly arranged in a circular ring shape, an elliptical ring shape, or a racetrack ring shape, or even a triangular shape, a rectangular shape, or a polygonal shape with the change of the shapes of the opening 221 and the channel 242. As shown in Fig. 14b, the size of the fixing part 261 may also be designed to be close to the lower cover plate 22, which facilitates later sealing and fixing. The sealing mechanism 26 in the present embodiment may also be made of aluminum, which is the same material as the lower cover plate 22. In this case, the sealing mechanism 26 is fixed by welding.

The battery cell B as shown in Fig. 15 is made of a commercially available square battery 28 (hereinafter referred to as a square battery), for example, a 280Ah battery commonly seen on the market, whose housing is usually made of aluminum, and has a sealed inner cavity. The electrolyte is contained in the inner cavity, and the inner cavity is provided with at least one set of electrode assemblies. Preferably, an opening is formed in the housing of the square battery in an environment with a dew point standard of -25°C to -40°C, a temperature of 23°C±2°C, and a cleanliness level of 100,000, and the opening is sealed with the sealing mechanism 26 of Fig. 11. The sealing mechanism 26 is made of aluminum, the positioning part 63 is inserted into the opening, and then the fixing part 261 is welded to the housing at the opening to seal the opening, and the inner cavity of the electrolyte injection part 262 communicates with the opening for standby use.

The battery cell B further includes the battery housing, which is provided with the opening in the lower cover plate, and is further provided with the pipeline 24 covering the opening and extending in the thickness direction of the battery cell. The side wall of the pipeline 24 is provided with the channel, as shown in Fig. 13a. The opening and the channel are the circular holes, or may be the strip holes as shown in Fig. 14a, respectively. In the present embodiment, the pipeline 24 is designed as the integral aluminum extrusion with the lower cover plate. At this time, the opening and the channel are combined into one channel, the cylinder 23 is the aluminum extrusion, the lower cover plate is fixed to one end of the cylinder 23 by laser welding, and a positive terminal and a negative terminal of the square battery are electrically connected to the positive terminal and the negative terminal of the upper cover plate respectively. The square battery with the upper cover plate welded is loaded into the cylinder 23 and the electrolyte injection part 262 of the sealing mechanism 26 extends into the pipeline 24 through the channel. Then, the upper cover plate with the square battery welded is fixedly welded to the other end of the cylinder 23 to form the battery cell B.

The battery cell B in the present embodiment may not use the upper cover plate, as long as the positive terminal and the negative terminal of the square battery is able to be led out and an upper gap after the square battery and the cylinder 23 are mounted is sealed. The square battery in the present embodiment is opened and may also be sealed with the sealing mechanism 26 of Fig. 10 and Fig. 12a. The sealing mechanism 26 in the present embodiment may also be made of plastic that is insoluble in the electrolyte. In this case, the sealing mechanism 26 is bonded to the opening of the housing of the square battery.

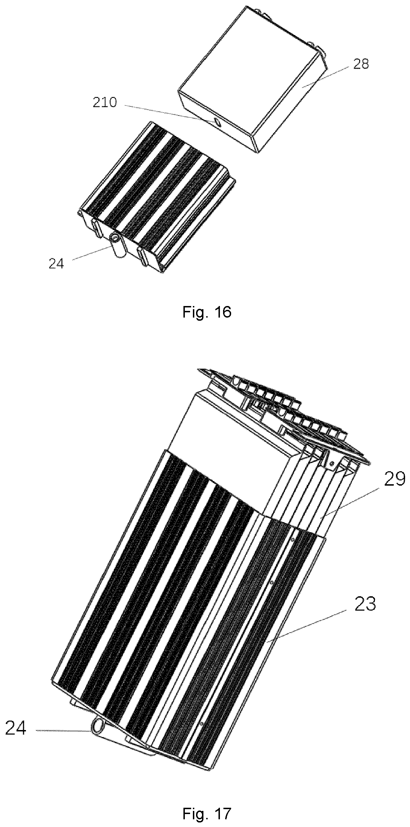

The battery cell C as shown in Fig. 16 is made of the commercially available square battery 28 (hereinafter referred to as the square battery), for example, the 280Ah battery commonly seen on the market, whose housing is usually made of aluminum, and has the sealed inner cavity. The electrolyte is contained in the inner cavity, and the inner cavity is provided with at least one set of electrode assemblies.

The battery cell C further includes the battery housing. As shown in Fig. 13a, the battery housing is provided with the opening 121 in the lower cover plate, and is further provided with the pipeline 24 covering the opening and extending in the thickness direction of the battery cell. The side wall of the pipeline 24 is provided with the channel 242. The opening 221 and the channel 242 are the circular holes, or may be the strip holes as shown in Fig. 14a, respectively. In the present embodiment, the pipeline 24 is designed as the integral aluminum extrusion with the lower cover plate 22. At this time, the opening 221 and the channel 242 are combined into one channel, the sealing mechanism 26 as shown in Fig. 10 is mounted in the channel 242, the sealing mechanism 26 is the plastic piece, the fixing part 261 is bonded to the edge corresponding to the opening 221 of the lower cover plate 22 (when the mounting position 2211 is arranged, the fixing part 261 is bonded to the mounting position 2211), the electrolyte injection part 262 extends into the channel 242 and into the pipeline 24, the opening 221 of the lower cover plate 22 is sealed, and the cylinder 23 is the aluminum extrusion. The lower cover plate 22 is fixed to one end of the cylinder 23 by laser welding, and the positive terminal and the negative terminal of the square battery are electrically connected to the positive terminal and the negative terminal of the upper cover plate 21 respectively, preferably in the environment with the dew point standard of -25 to -40°C, the temperature of 23°C±2°C, and the cleanliness level of 100,000. An opening 210 is formed at the bottom of the housing of the square battery, the opening 210 is formed, then the square battery is loaded into the cylinder 23, and the upper cover plate 21 is fixedly welded to the other end of the cylinder 23 to form the battery cell C.

In the present embodiment, the battery cell C may not use the upper cover plate 21, as long as the positive terminal and the negative terminal of the square battery is able to be led out and the upper gap after the square battery and the cylinder 23 are mounted is sealed. The opening 221 of a lower cover in the present embodiment may also be sealed with the sealing mechanism 26 of Fig. 12a. The sealing mechanism 26 in the present embodiment may also be made of aluminum, which is the same material as the lower cover plate 22. In this case, the sealing mechanism 26 is fixed by welding.

The battery cell D as shown in Fig. 17 is made of a commercially available pouch battery 29 (hereinafter referred to as a pouch battery), whose housing is usually an aluminum-plastic film, and has a sealed inner cavity. The inner cavity is filled with the electrolyte, and the inner cavity is provided with at least one set of electrode assemblies.

As shown in Fig. 13a, the battery cell D further includes the battery housing, which is provided with the opening 221 in the lower cover plate 22, and is further provided with the pipeline 24 covering the opening 221 and extending in the thickness direction of the battery cell. The side wall of the pipeline 24 is provided with the channel 242. The opening 221 and the channel 242 are the circular holes, or may be the strip holes as shown in Fig. 14a, respectively. In the present embodiment, the pipeline 24 is designed as the integral aluminum extrusion with the lower cover plate 22. At this time, the opening 221 and the channel 242 are combined into one channel, the sealing mechanism 26 as shown in Fig. 10 is mounted in the channel 242, the sealing mechanism 26 is the plastic piece, the fixing part 261 is bonded to the edge corresponding to the opening 221 of the lower cover plate 22 (when the mounting position 2211 is arranged, the fixing part 261 is bonded to the mounting position 2211), the electrolyte injection part 262 extends into the channel 242 and into the pipeline 24, the opening 221 of the lower cover plate 22 is sealed, and the cylinder 23 is the aluminum extrusion. The lower cover plate 22 is fixed to one end of the cylinder 23 by laser welding. Seven pouch batteries are used in the present embodiment, and positive tabs and negative tabs of the seven pouch batteries are welded to the positive and negative terminals 25 of the upper cover plate 21, preferably in the environment with the dew point standard of -25 and -40°C, the temperature of 23°C±2°C, and the cleanliness level of 100,000. After the openings are formed in the housings of the pouch batteries, the seven pouch batteries with the upper cover plates 21 welded are placed in the cylinder 23, and the upper cover plate 21 is fixedly welded to the other end of the cylinder 23 to form the battery cell D.

In the present embodiment, the battery cell D may not use the upper cover plate 21, as long as the positive tabs and the negative tabs of the pouch batteries is able to be led out and an upper gap after the pouch batteries and the cylinder 23 are mounted and an upper gap between the pouch batteries are sealed. The opening 221 of the lower cover in the present embodiment may also be sealed with the sealing mechanism 26 of Fig. 12a. The sealing mechanism 26 in the present embodiment may also be made of aluminum, which is the same material as the lower cover plate 22. In this case, the sealing mechanism 26 is fixed by welding.

The functions of the pipelines 24 in the battery cells A to D are described in detail below.

As shown in Fig. 13a, 13b, 13c, and 13d, when the plurality of battery cells provided with the sealing mechanisms 26 form a large-capacity battery, the pipelines 24 are spliced to form a through channel to serve as a shared electrolyte channel for the large-capacity battery. One end of the shared electrolyte channel is provided with a blocking piece, while the other end thereof is provided with a port for detachably connecting to other assemblies to mount an electrolyte injection assembly or an explosion venting valve. Before the electrolyte injection assembly is mounted, a special tool is first used to go deep into the shared electrolyte channel to sequentially shovel off the electrolyte injection parts 262 exposed by the sealing mechanisms 26, so that the inner cavities of all the battery cells communicate with the shared electrolyte channel, and the residual part is recovered by the special tool. After the electrolyte injection assembly is mounted, the electrolyte is injected into the shared electrolyte channel through the electrolyte injection assembly, and the electrolyte sequentially enters the battery housing through the channel 242 and the opening 221, so that all the battery cells in the large-capacity battery are located in a uniform electrolyte environment, thereby effectively improving the uniformity of the electrolyte in the large-capacity battery, and then the explosion venting valve is replaced after the electrolyte injection is completed. The shared electrolyte channel may also be configured to replenish and replace the electrolyte for the large-capacity battery. When the large-capacity battery is used for more than a certain number of years, the electrolyte is lost, the explosion venting valve is replaced, the electrolyte injection assembly is mounted, and the electrolyte is extracted and replaced with a new electrolyte or the new electrolyte is directly replenished. Both manners help to prolong the service life of the large-capacity battery. The above structure may also achieve that when thermal runaway occurs in any battery cell, the thermal runaway flue gas in the battery cell is discharged through the opening 221 and the channel to the shared electrolyte channel composed of the pipelines 24, and is discharged after passing through the explosion venting valve.

As shown in Fig. 13d, the pipelines 24 are fixedly connected through a connecting piece 27 to form the shared electrolyte channel. The external dimension of the connecting piece 27 is comparable to that of the pipeline 24, which helps to improve the stability of the connection between the pipelines 24. Preferably, the connecting piece 27 includes two connecting nozzles 271, both ends of the pipeline 24 being provided with connecting ports 241, and the connecting nozzles 271 being embedded in the connecting ports 241 for sealing connection. Or the connecting piece 27 includes two connecting ports 241, both ends of the pipeline being provided with the connecting nozzles 271, and the connecting nozzles 271 being embedded in the connecting ports 241 for sealing connection. The shape of the connecting nozzle 271 is preferably slightly tapered, which facilitates insertion into the connecting port 241. Preferably, the connecting nozzle 271 is in interference fit with the connecting port 241, the connecting nozzle 271 is riveted to the connecting port 241, and an adhesive such as epoxy glue may be added to a riveted surface during riveting to further achieve good sealing and fixing effects, or the connecting nozzle 271 and the connecting port 241 are in threaded connection.

As shown in Fig. 13a, the terminal 25 in the present embodiment is provided with a through groove 250 for mounting a heat transfer tube, and an opening of the through groove 250 is located on an end surface of the terminal 25. The end surface is further provided with an electrical connection area, so that an elongated L-shaped plate-like electrical connecting piece 27 is connected to the electrical connection areas of a plurality of terminals 25 of the same polarity at the same time to achieve the parallel connection of the plurality of battery cells.

As shown in Fig. 13a and Fig. 13b, the lower cover plate 22 is further provided with a first battery assembly seat 231 in a width direction thereof. A side wall of the cylinder 23 is further provided with a second battery assembly seat 232 in a height direction thereof. When the battery cells are assembled into a battery pack, the battery cells are assembled into the large-capacity battery by mounting assembly bars on the first battery assembly seat 231 and the second battery assembly seat 232, and the assembly seats are provided with screw holes for fixing. An outer surface of the cylinder 23 is provided with a plurality of heat radiating grooves 233 extending in a height direction thereof to facilitate heat dissipation of the battery cells. The cylinder 23 is further provided with a plurality of reinforcing ribs 234 extending in the height direction thereof to enhance the compressive strength of the cylinder 23. In some implementations, the pipeline 24 may be arranged on the side wall of the cylinder 23 of the battery.

### Embodiment 5

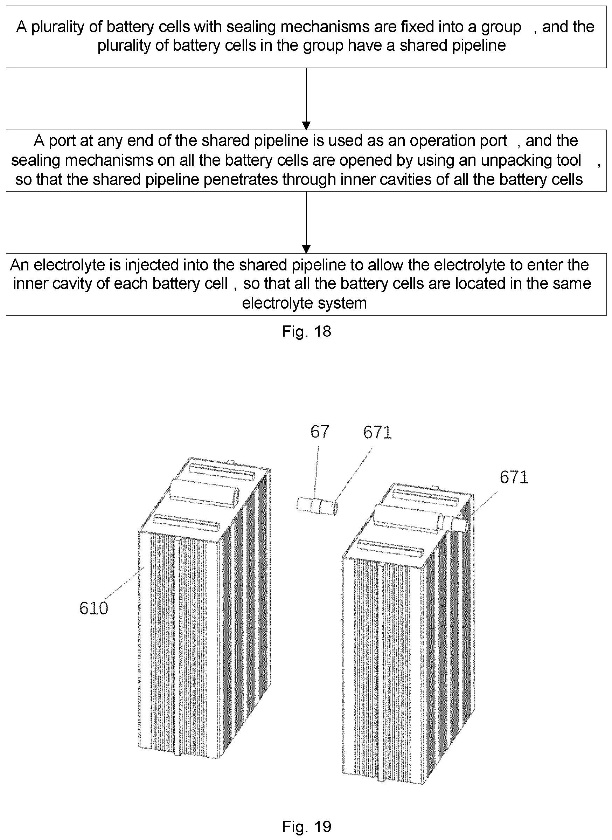

As shown in Fig. 18, the present embodiment provides a manufacturing method for a large-capacity battery, the method including the following steps.

At S1, a plurality of battery cells with sealing mechanisms are arranged and fixed into a group, and a shared pipeline is formed on the plurality of battery cells in the group.

In this step, the sealing mechanism of the battery cell is configured to seal an opening in the battery cell. Accordingly, the shared pipeline is provided with a plurality of through holes spaced apart in a side wall of the pipeline to ensure that each through hole corresponds to the sealing mechanism of one battery cell. Such a design may provide necessary electrolyte sharing conditions for the subsequent S2.

At S2, a port at any end of the shared pipeline is used as an operation port, and the sealing mechanisms on all the battery cells are opened by using an unpacking tool, so that the shared pipeline penetrates through inner cavities of all the battery cells.

At S3, an electrolyte is injected into the shared pipeline to allow the electrolyte to enter the inner cavity of each battery cell, so that all the battery cells in the large-capacity battery are located in the same electrolyte system.

The shared pipeline in the above S1 may be formed in the following two forms.
1. After being arranged and placed, the shared pipeline may be welded to each battery cell by using an integrally formed pipeline, and after welding, the sealing mechanism of each battery cell is ensured to be located in the shared pipeline.
2. The shared pipeline may also be formed by splicing the pipelines arranged on the battery cells during the arrangement and placement of the battery cells. Considering the machining cost, assembly convenience, and sealing performance, the spliced shared pipeline is preferred.

Based on the above spliced shared pipeline, the battery cell may be in the following three structural forms.
1. The general structure of the battery cell is as follows: a commercially available finished square housing battery is mounted in an aluminum square housing; a pipeline of the shared pipeline is arranged on the square housing, and a sealing mechanism is arranged at a position corresponding to the pipeline; and the sealing mechanism may be arranged on the square housing, or the housing of the commercially available finished square housing battery.
2. The general structure of the battery cell is as follows: a plurality of commercially available pouch batteries are connected in parallel and mounted in the aluminum square housing. The pipeline of the shared pipeline is arranged on the square housing, and a sealing mechanism is arranged at a position, corresponding to the pipeline, of the square housing.
3. The general structure of the battery cell is as follows: an electrode assembly is placed in the square housing, and the electrolyte is contained in the square housing. The pipeline of the shared pipeline is arranged on the square housing, and a sealing mechanism is arranged at a position, corresponding to the pipeline, of the square housing.

Specifically, the structure of the above battery cell is detailed in the battery cell in Embodiment 2 and the battery cell A, the battery cell B, the battery cell C, and the battery cell D in Embodiment 4.

Normally, a large-capacity battery is assembled by using only one type of the battery cell 610, unless all the consistency requirements are met, then mixed assembly may be performed as needed.

As shown in Fig. 19, when a plurality of battery cells 610 are fixed into a group, the pipelines on the battery cells 610 are spliced to form the shared pipeline. The pipelines on two adjacent battery cells 610 may be spliced by a connecting pipe 67. Specifically, both ends of the connecting pipe 67 are provided with protruding connecting nozzles 671, and both ends of the pipeline are provided with corresponding connecting ports. The connecting nozzles 671 of the connecting pipe 67 are embedded in the connecting ports of two adjacent pipelines to achieve the splicing of the shared pipeline. Such a design helps to simplify the machining technology. Compared with a complete shared pipeline, such a segmented shared pipeline is not only conducive to machining, but also eliminates sealing and mounting processes between the pipeline and the housing of the battery cell 610, and may also avoid leakage caused by poor sealing between the two, and the machining and mounting costs are also relatively low.

In some implementations, the connecting pipe 67 may be omitted. When the pipelines are spliced to form the shared pipeline, the pipelines arranged on the housing may be spliced with each other to form the shared pipeline in the form of male and female interfaces, that is, one end of the pipeline is provided with the connecting nozzle 671 protruding from the pipeline, and the other end of the pipeline is provided with a corresponding recessed connecting port. The connecting nozzle 671 of one pipeline may be embedded in the connecting port of another pipeline. Such a design may reduce parts for splicing of the shared pipeline. However, such a design cannot complete the production of the parts through an extrusion process, and increases the machining cost compared with the solution using the connecting pipe 67.

After the shared pipeline is formed, in S2, the core is how to open the sealing mechanism, so that the inner cavities of the battery cells 610 with the shared pipeline all communicate with each other. There may be many different forms and methods in this step, and the order may also be exchanged, for example.

If the battery cell 610 having the sealing mechanism with a fixing part and an electrolyte injection part is used, the sealing mechanism may be opened by using the unpacking tool. The specific structure of the unpacking tool is as follows.

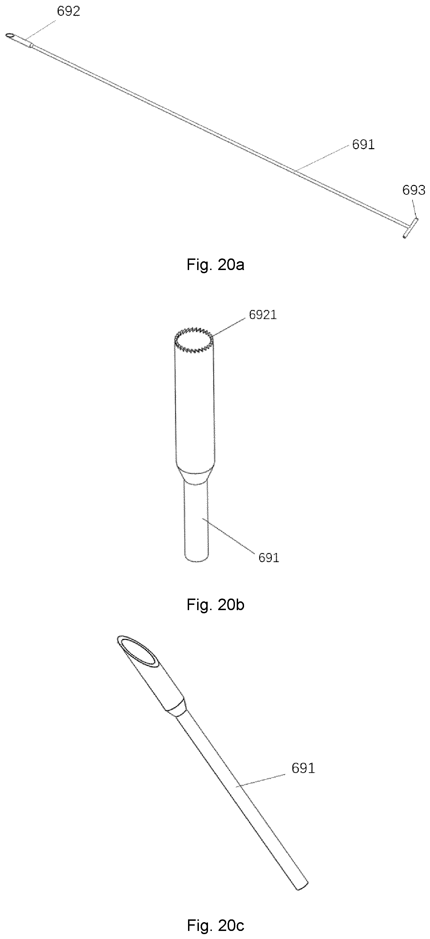

Fig. 20a, Fig. 20b, and Fig. 20c are schematic structural diagrams of the unpacking tool used for cutting the sealing mechanism in the above manufacturing method. The unpacking tool includes a slender rod 691. One end of the slender rod 691 is provided with a cutting part 692, and the cutting part 692 is configured to cut the sealing mechanism. The other end of the slender rod 691 is further provided with a handle 693 for operation, which facilitates operation of the slender rod 691. The cutting part 692 includes a hollow pipe for recovering the residual part of the sealing mechanism, and an end of the hollow pipe is provided with a serrated blade 6921. In some implementations, the cutting part 692 is a hollow pipe with a wedge end. During specific use, the unpacking tool is inserted from the operation port of the shared pipeline. During the extending process, the cutting part 692 of the unpacking tool shovels off closed ends of the sealing mechanisms extending into the electrolyte injection part of the shared pipeline one by one, and then the residual parts of the cut closed ends are recovered by using the hollow pipe of the cutting part 692 to prevent same from entering the inner cavity of the battery cell 610 and affecting the performance of the battery. The size of the cutting part 692 of the unpacking tool is designed to be larger than the diameter of the slender rod 691, and most preferably, the outer diameter of the cutting part 692 is slightly smaller than the inner diameter of the shared pipeline to facilitate cutting. The length of the cutting part 692 does not need to be particularly long, and if it is designed to be too long, the cost of manufacturing the unpacking tool increases. Therefore, it is only necessary to ensure that the hollow pipe may accommodate the residual parts of all the cut closed ends. In addition, because the cutting part 692 is configured to cut the sealing mechanism, the requirement for the hardness of the material is higher than that of the slender rod 691.

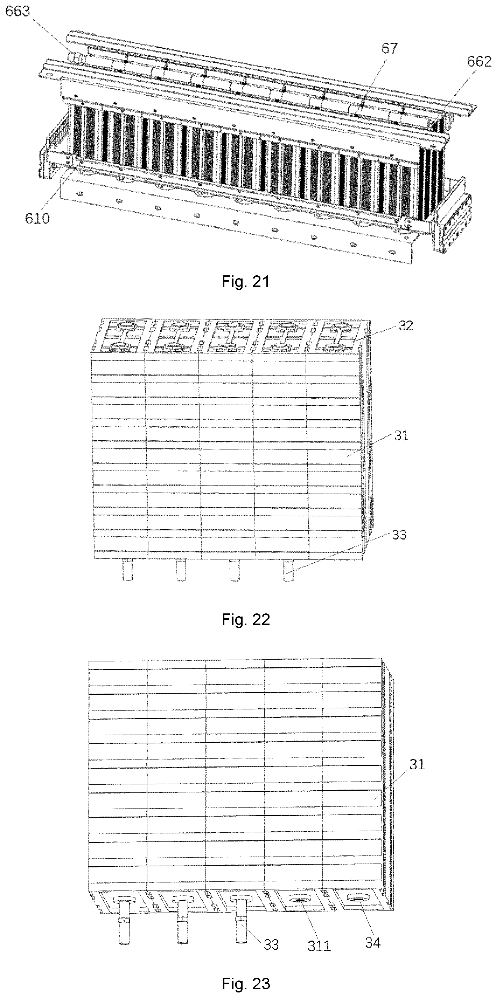

Fig. 21 is a schematic structural diagram of a large-capacity battery manufactured based on a manufacturing method provided by the present embodiment from different perspectives. As mentioned above, before the large-capacity battery is formed, the sealing mechanism seals the opening of each battery cell 610. When the large-capacity battery is formed, after the sealing mechanism forms the opening by using the unpacking tool, the inner cavities of all the battery cells 610 communicate with the shared pipeline, so that the electrolyte is injected into the inner cavities of all the battery cells 610 through the shared pipeline to allow all the battery cells 610 in the large-capacity battery to be located in the same electrolyte system, thereby improving the uniformity of each battery cell 610 in the large-capacity battery.

In addition, it is also to be noted that when each battery cell 610 is provided with an independent explosion venting hole, the shared pipeline is used only as a shared electrolyte pipeline, and one end of the shared pipeline may be provided with a sealing apparatus to inject the electrolyte, while the other end thereof is provided with a blocking piece 662. The sealing apparatus should be provided with a valve, and an interface for connecting an electrolyte injection pipe is reserved. In order to open the sealing mechanism through the shared pipeline, the sealing apparatus may be detachable, or the operation port may be reserved, so that the unpacking tool may enter the shared pipeline through the operation port to open the sealing mechanism.

When each battery cell 610 is not provided with the independent explosion venting hole, the shared pipeline is used not only as the shared electrolyte pipeline, but also as an explosion venting channel. One end of the shared pipeline may be provided with an explosion venting assembly 663, the operation port at the other end is provided with the sealing apparatus, and the unpacking tool for opening the sealing mechanism may enter from either end. Or, one end of the shared pipeline may also be provided with the blocking piece 662, and the operation port at the other end is provided with a detachable explosion venting assembly 663. When the electrolyte is injected through the shared pipeline, the explosion venting assembly 663 is disassembled to form the operation port, and after the unpacking tool extends into the operation port to shovel off the sealing mechanism, the electrolyte is injected through the operation port. After the electrolyte injection is completed, the explosion venting assembly 663 is restored. When thermal runaway occurs in the large-capacity battery, the shared pipeline is used as the explosion venting channel, and the thermal runaway flue gas is discharged through the explosion venting assembly 663.

One end of the shared pipeline is used as the operation port, while the other end thereof may be sealed in advance with the blocking piece 662 or the explosion venting assembly 663 before unpacking of the sealing mechanism. The above apparatus is detachable or non-detachable, and is specifically arranged according to specific needs. The other end of the shared pipeline may also be sealed with the sealing piece 662 or the explosion venting assembly 663 after unpacking of the sealing mechanism, which depends on whether the conditions of the unpacking environment meet the specific requirements for unpacking the battery cell 610. Normally, it is preferred to complete the unpacking in an environment with a dew point standard of -25°C and -40°C, a temperature of 23°C±2°C, and a cleanliness level of 100,000. When this condition is able to be met, the sealing of the shared pipeline may be adjusted according to the specific machining flow and procedures.

### Embodiment 6

As shown in Fig. 22 to Fig. 25, a battery housing provided in the present embodiment includes an upper cover assembly 32, a housing body 31, and a sealing mechanism. The housing body 31 is of a housing structure with an open end, and the battery housing is enclosed by the upper cover assembly 32 and the housing body 31. The housing body 31 is provided with an opening 311 communicating with an inner cavity thereof. The sealing mechanism includes a connecting pipe 33 and a sealing film 34. The connecting pipe 33 is arranged on the housing body 31 and communicates with the inner cavity of the housing body 31 through the opening 311, and the connecting pipe 33 may be integrally provided with the housing body 31, or may be welded to the housing body 31 or hermetically connected to the housing body 31 through a flange. The sealing film 34 is arranged in the opening 311 of the housing body 31 to seal the housing body 31, so as to prevent an electrolyte in the battery housing from contacting with the external air. At the same time, the sealing film 34 is arranged on one side, away from the upper cover assembly 32, of the housing body 31. The upper cover assembly 32 is provided with a positive terminal and a negative terminal. After intercommunication of electrolytes in a plurality of battery cells, when a large-capacity battery is used, the upper cover assembly 32 is placed upward, and an electrolyte storage pipe 36 and the connecting pipe 33 are placed downward.

When the plurality of battery cells are connected in parallel to form the large-capacity battery, the connecting pipes 33 of the plurality of battery housings may be connected to the electrolyte storage pipe 36 through butt joint pieces, the plurality of battery cells are located in a uniform electrolyte system, and the sealing film 34 needs to be opened. At this time, the connecting pipe 33 may be connected to an external gas source, and the gas source fills the connecting pipe 33 with high-pressure gas, for example, inert gas such as nitrogen, and the sealing film 34 is ruptured and opened under the pressure of the high-pressure gas. This manner avoids contact with water vapor or impurities in the air during the opening of the sealing film 34. The electrolyte is poured into the battery housing through the electrolyte storage pipe 36, and the electrolyte is injected from the outside of the battery housing to the inside through the sealing mechanism, so that the electrolyte enters the battery housing, intercommunication of the electrolytes in the plurality of batteries is achieved, and the plurality of batteries are located in a uniform electrolyte system, thereby greatly improving the consistency of the energy storage performance of each battery cell, and improving the performance, yield rate and service life of the battery.

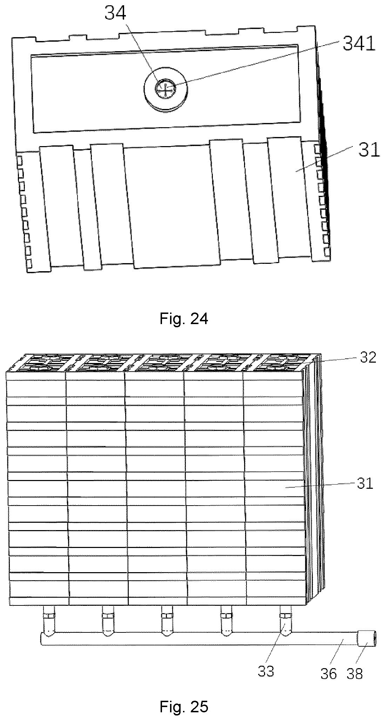

In the present embodiment, the material of the sealing film 34 is at least one of copper, aluminum, PP, PE, and polytetrafluoroethylene. As shown in Fig. 24, in order to quickly open the sealing film 34, the sealing film 34 may be provided with a notch 341, so that the sealing film 34 is a weak part of the housing body 31, and the sealing film 34 may be opened at the notch 341. In other embodiments, the material of the sealing film 34 may be the same as that of the housing body 31, and the sealing film 34 is integrally provided with the housing body 31. The thickness of the sealing film 34 is smaller than the wall thickness of the housing body 31, so that the sealing film 34 is the weak part of the housing body 31.

### Embodiment 7

As shown in Fig. 22, Fig. 26, and Fig. 27, a battery housing provided in the present embodiment includes an upper cover assembly 32, a housing body 31, and a sealing mechanism. Unlike Embodiment 6, a sealing film 34 in the present embodiment is arranged in a connecting pipe 33 to seal the battery housing. The connecting pipe 33 in the present embodiment is internally provided with an opening apparatus 35. The opening apparatus 35 is of a structure having an ejecting protrusion or an ejecting spike at one end and a circular truncated cone at one end. The size of the circular truncated cone matches the inner diameter of the connecting pipe 33, that is, the diameter of the circular truncated cone is the same as the inner diameter of the connecting pipe 33 or the diameter of the circular truncated cone is slightly smaller than the inner diameter of the connecting pipe 33, so that the opening apparatus 35 may move in the connecting pipe 33 under the action of external pressure. When the opening apparatus 35 moves, the ejecting protrusion or ejecting spike of the opening apparatus 35 may open the sealing film 34, so that the sealing film 34 is opened to achieve electrolyte injection. At the same time, a notch may be arranged at a center of the sealing film 34, and the ejecting protrusion or ejecting spike of the opening apparatus 35 opens the notch to achieve the rapid opening of the sealing film 34.

When a plurality of battery cells are connected in parallel to form a large-capacity battery, the connecting pipes 33 of the plurality of battery housings may be connected to an electrolyte storage pipe 36 through butt joint pieces. The connecting pipe 33 may be connected to an external gas source, and the gas source fills the connecting pipe 33 with high-pressure gas, for example, inert gas such as nitrogen. The opening apparatus 35 moves in the connecting pipe 33 under the pressure of the high-pressure gas, and the opening apparatus 35 opens the sealing film 34. This structure avoids contact with water vapor or impurities in the air during the opening of the sealing film 34. Then, an electrolyte is poured into the battery housing through the electrolyte storage pipe 36, and the electrolyte enters the inside of the battery housing, so that intercommunication of the electrolytes in the plurality of batteries is achieved, and the plurality of batteries are located in a uniform electrolyte system, thereby greatly improving the consistency of the energy storage performance of each battery cell, and improving the performance, yield rate and service life of the battery.

In order to prevent the opening apparatus 35 from being connected to the sealing film 34 and unable to be separated after opening the sealing film 34, -40 mmHg suction may be performed in the electrolyte storage pipe 36 to form a pressure difference between both sides of the opening apparatus 35, and the opening apparatus 35 is sucked and separated from the sealing film 34 in the opposite direction. If the opening apparatus 35 and the sealing film 34 are separated, the pressure difference of the negative pressure suction may be used to further expand an opening 311 pierced on the sealing film 34. After the negative pressure suction is completed, the electrolyte is filled. In this way, it is ensured that each battery cell is soaked in the electrolyte, so that the internal environments of the plurality of battery cells are integrated. It is ensured that each battery cell has not only the same electrical properties, but also the same working environment and the environment in which the electrolyte is soaked. In this way, the consistency of the electrical properties and working conditions of all the battery cells is ensured, thereby greatly prolonging the service life of large-capacity battery.

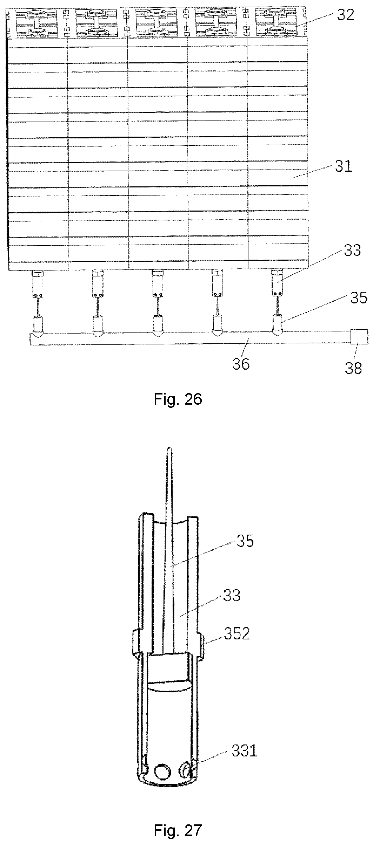

As shown in Fig. 27, in the present embodiment, the opening apparatus 35 opens the sealing film 34 of the battery under the action of external pressure to achieve intercommunication of the electrolytes. The opening apparatus 35 is arranged in the connecting pipe 33 having a positioning boss 352. The positioning boss is configured to limit the opening apparatus 35 to ensure that the opening apparatus 35 may open the sealing film 34 without damaging an electrode assembly. When the opening apparatus 35 opens the sealing film 34, the size of the opening apparatus 35 may be arranged smaller than the pipe diameter of the connecting pipe 33, so that the electrolyte is circulated in a gap between the opening apparatus 35 and the connecting pipe 33. Or, when the connecting pipe 33 is connected to the electrolyte storage pipe 36, the connecting pipe 33 partially extends into the electrolyte storage pipe 36. At this time, the connecting pipe 33 extending to the inside of the electrolyte storage pipe 36 may be provided with a through hole 331. After the opening apparatus 35 opens the sealing film 34, the opening apparatus 35 falls back to the bottom of the connecting pipe 33. At this time, the opening apparatus 35 may block the bottom of the connecting pipe 33, and the electrolyte cannot flow in from the bottom of the connecting pipe 33. At this time, the electrolyte may be injected circumferentially through the through hole 331 to ensure that the electrolyte between the large-capacity batteries is shared. Of course, at this time, it is required that the thickness of the circular truncated cone of the opening apparatus 35 is smaller than the pipe diameter of the electrolyte storage pipe 36, and the circular truncated cone is located below the through hole 331 without blocking the through hole 331.

In addition, as shown in Fig. 26, the electrolyte storage pipe 36 may further be provided with an explosion venting apparatus 38 to discharge flue gas generated when thermal runaway occurs in the large-capacity battery, and the explosion venting apparatus 38 may specifically be an explosion venting valve.

### Embodiment 8

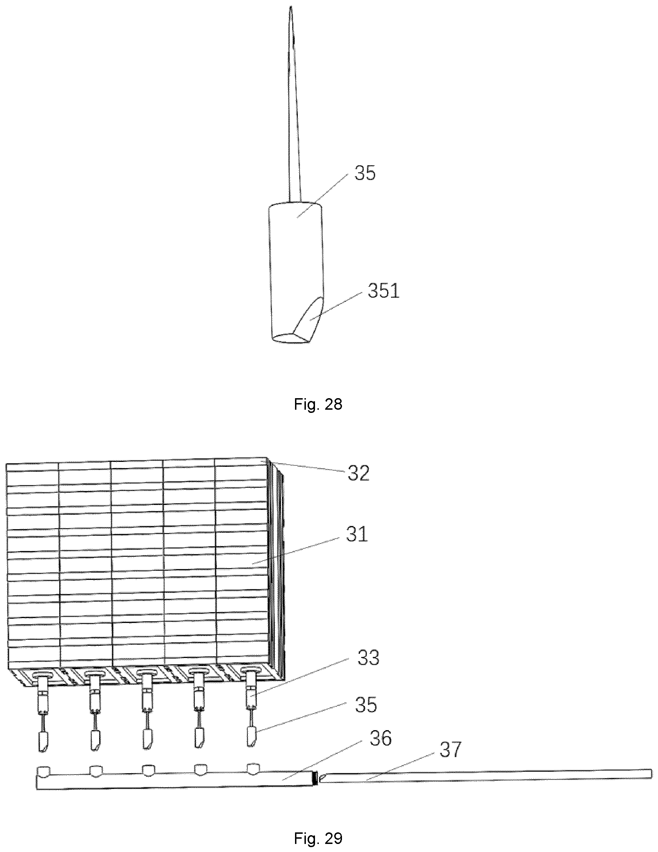

As shown in Fig. 28 and Fig. 29, a battery housing provided in the present embodiment includes an upper cover assembly 32, a housing body 31, and a sealing mechanism. Unlike Embodiment 6, a sealing film 34 in the present embodiment is arranged in an opening 311 of the housing body 31 or in a connecting pipe 33 to seal the battery housing. The connecting pipe 33 is internally provided with an opening apparatus 35, the opening apparatus 35 is of a structure having an ejecting protrusion or an ejecting spike at one end and a circular truncated cone at one end, and the opening apparatus 35 may move in the connecting pipe 33 under an external force, so that the opening apparatus 35 opens the sealing film 34. This opening manner is a mechanical opening manner, the sealing film 34 is opened by an external mechanical force, that is, an electrolyte storage pipe 36 may be internally provided with a sliding apparatus, the sliding apparatus is a sliding rod 37, and the sliding rod 37 pushes the opening apparatus 35 to slide in the connecting pipes 33, so that the opening apparatus 35 opens the sealing film 34. In order to allow the electrolyte to circulate better after the opening apparatus 35 is ejected, the opening apparatus 35 may be a hollow opening apparatus internally provided with a through channel in a moving direction thereof, and the electrolyte enters the battery housing through the through channel. In addition, the sliding rod also occupies part of the space inside the electrolyte storage pipe 36 to reduce the amount of electrolyte used.

As shown in Fig. 28, in order to quickly and accurately move the opening apparatus 35, an end surface of the opening apparatus 35 cooperating with the sliding apparatus is provided with a wedge surface 351. When the electrolyte is injected from the outside of the battery housing to the inside through the sealing mechanism, the operation is performed in an environment of a sealed box or a dry box, the sliding rod 37 is pushed to slide in the electrolyte storage pipe 36, the hollow opening apparatus 35 is pushed toward the sealing film 34, and the sealing film 34 is opened, so that the electrolyte enters the battery housing. This structure avoids contact with water vapor or impurities in the air during the opening of the sealing film 34. The material of the sealing film 34 is at least one of copper, aluminum, PP, PE, and polytetrafluoroethylene.

The present embodiment further provides a large-capacity battery, including the electrolyte storage pipe 36 and a plurality of battery cells. The electrolyte storage pipe 36 communicates with the connecting pipes 33 of the plurality of battery housings. Before the large-capacity battery is formed, the capacitance, internal resistance, and charge-discharge characteristics of each electrode assembly are tested first, and errors of the above three parameters of each electrode assembly are within 1% before the electrode assembly may enter the same group for matching. The connecting pipe 33 communicates with the electrolyte storage pipe 36 through a butt joint piece. After the sealing film 34 is opened, the electrolyte is poured into the battery housing through the electrolyte storage pipe 36, so that the electrolyte enters the inside of the battery housing, intercommunication of the electrolytes in the plurality of batteries is achieved, and the plurality of batteries are located in a uniform electrolyte system, thereby greatly improving the consistency of the energy storage performance of each battery cell, and improving the performance, yield rate and service life of the battery. In the present invention, the sealing film 34 is opened by an external force or external pressure in the connecting pipe 33. In this way, the sealing film 34 is able to be opened without contacting with the air, which may effectively prevent the battery housing from contacting with the water vapor in the air when being opened. The operation method is simple and reliable, good in isolation of the water vapor, free of other manufacturing processes of the battery, easy to operate, able to improve the performance and the yield rate of the battery, simple in structure, convenient to mount, and strong in universality.

### Embodiment 9

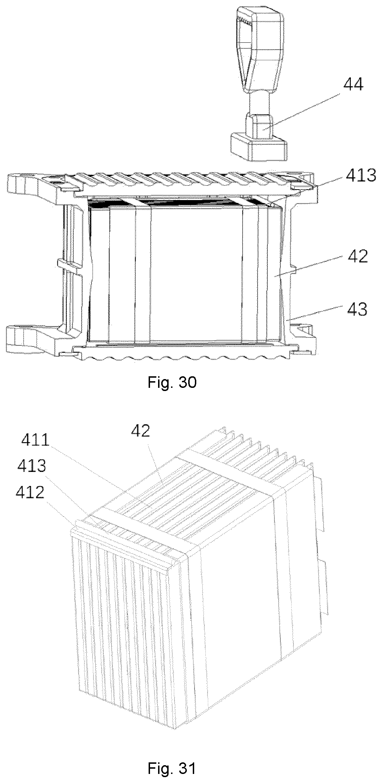

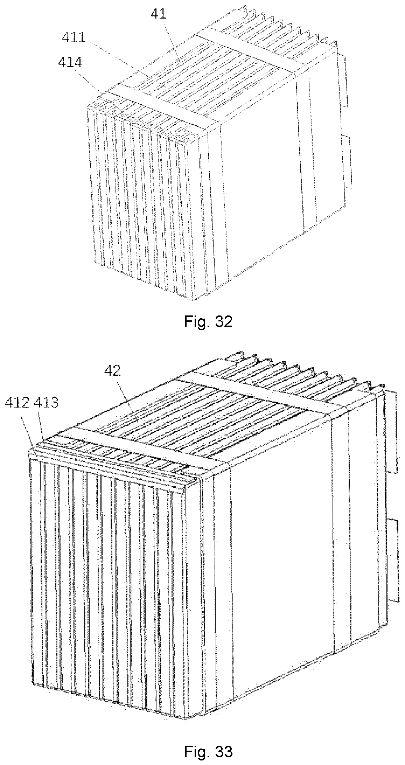

As shown in Fig. 30 to Fig. 33, a battery housing provided in the present embodiment includes a housing body 411 and a sealing mechanism. The housing body 411 is provided with an opening 414 communicating with an inner cavity thereof, and the opening 414 may be a rectangular opening or a circular opening. The sealing mechanism includes a sealing layer 412 and a magnetic apparatus 413. The sealing layer 412 is arranged on the housing body 411 and seals the opening 414. The magnetic apparatus 413 is connected to the sealing layer 412 and is located on one side, away from the housing body 411, of the sealing layer 412. When the magnetic apparatus 413 is attracted by a magnetic piece 44, at least part of the sealing layer 412 is separated from the housing body 411, and the opening 414 is opened, so that an electrolyte is injected through the opening 414.

In the present embodiment, the magnetic apparatus 413 is made of iron, cobalt or nickel. The sealing layer 412 of the battery housing 41 is connected to the housing body 411 through an adhesive, and the sealing layer 412 is one of PP, PE, and polytetrafluoroethylene. The magnetic apparatus 413 is a magnetic rod, which is connected to the sealing layer 412 by winding. At the same time, the adhesive may also be arranged between the sealing layer 412 and the magnetic rod for further fixation. In other embodiments, the sealing layer 412 is a self-adhesive tape with adhesive property. The opening 414 of each battery housing 41 is manufactured and quickly bonded directly to the housing with the self-adhesive tape to seal the circular opening. The magnetic apparatus 413 is a magnetic block, which is fixedly connected to the sealing layer 412 by bonding. At this time, the reliability of the bonding between the magnetic block and the sealing layer 412 must be stronger than the reliability of the self-adhesive tape.

The present embodiment further provides a battery cell 42. The battery cell 42 includes an electrode assembly, an electrolyte, and the above battery housing 41. The electrode assembly and the electrolyte are both arranged in the battery housing 41, and the electrode assembly is soaked in the electrolyte. The opening 414 in the battery housing 41 may be machined during the manufacturing of the battery housing 41 and sealed with the sealing layer 412 afterwards, followed by the electrolyte injection to form the battery cell 42, or after the battery cell 42 is manufactured, the opening 414 is formed in the battery casing 41, and then sealed quickly with the sealing layer 412 in an environment with a dew point standard of -25°C to -40°C, a temperature of 23°C±2°C, and a cleanliness level of 100,000.

The sealing layer 412 and the magnetic rod are located on an outer side surface of the top, away from a tab, of the battery housing 41, are in a high potential energy state, and are not affected by the gravity of each battery cell 42, and the magnetic rod may move freely. After the battery housing 41 is sealed, a strong magnet is used to quickly approach the magnetic rod connected to the sealing layer 412 from the outside of the large-capacity battery, and the inside magnetic rod is attracted to an outer inner wall of the battery cavity by magnetic attraction. The impact kinetic energy generated by the adsorption movement of the inside magnetic rod is used to tear the sealing layer 412, so that the opening 414 of the battery housing 41 is opened.

In addition, the magnetic apparatuses 413 of the plurality of battery housings 41 may be fixedly connected, or the magnetic apparatuses 413 of the plurality of battery housings 41 may be arranged as an integrated structure, that is, the plurality of housing bodies 411 use one magnetic apparatus 413. Through the arrangement, the plurality of openings 414 may be opened at the same time. Of course, the plurality of magnetic apparatuses 413 may also be used to open the openings 414 separately.

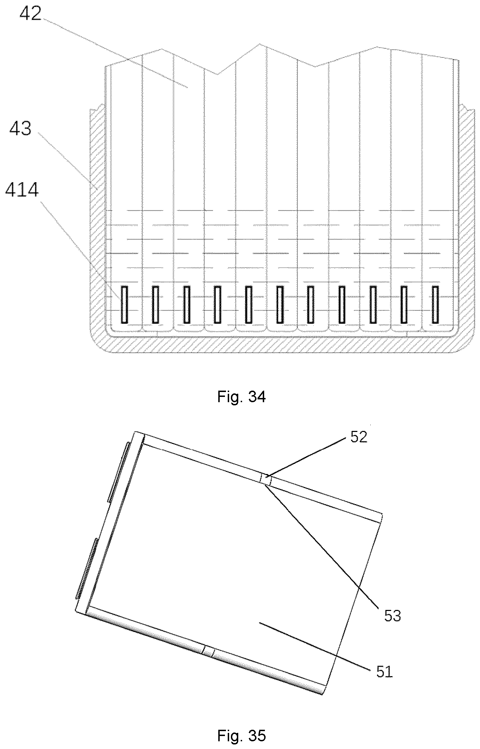

As shown in Fig. 34, the present embodiment further provides a large-capacity battery, including a battery box 43 and a plurality of battery cells 42. The battery cells 42 are pouch batteries. The large-capacity battery is mainly composed of a plurality of selected pouch batteries with the same electrical properties connected in parallel. Before the pouch batteries forming a large-capacity lithium-ion battery form a group, the capacity, internal resistance, and charge-discharge characteristics are tested, and errors of the above three parameters of each pouch battery are within 1% before the pouch battery may enter the same group for matching. The plurality of pouch batteries with the same electrical properties (ignoring the selection error) are stacked, pressed with a pressing plate, and tied with a binding belt. Before the electrolyte is injected into the large-capacity battery, outer side surfaces of the housing bodies 411, away from the tab, of all the pouch batteries are uniformly provided with a strip opening. The effective length of the strip opening is not smaller than 10 MM. After the opening 414 is opened, each opening 414 is quickly sealed with the sealing layer 412, and then the large-capacity battery is loaded into the battery box 43. The sealing layer 412 of each pouch battery is reliably connected to the magnetic rod, and a conductive connecting piece, terminal or plate of each battery cell 42 is welded and connected in parallel, and finally the battery box 43 is sealed. Then, the pouch battery is loaded into the battery box 43, and the magnetic block is adhered to the self-adhesive tape adhered to each pouch battery, and finally a cavity of the battery box 43 is sealed.

When electrolyte replenishing after precharge and grading is performed on the large-capacity battery, a strong magnet is used to quickly approach the magnetic rod fixedly connected to the sealing layer 412 in the cavity of the battery box 43 from the outside of the battery box 43, and the inside magnetic rod is attracted to the outer inner wall of the battery cavity by magnetic attraction. The impact kinetic energy generated by the adsorption movement of the magnetic rod is used to tear the sealing layer 412 to seal each opening 414, so that the opening 414 of each battery cell 42 is opened. During the magnetic attraction process, the sealing layer 412 and the magnetic rod are located at the top of the housing body 411 to prevent the gravity of the inside pouch battery from pressing the magnetic rod and affecting the movement of the magnetic rod. After each opening 414 is opened, -40 mmHg suction is performed in the internal environment of the battery box 43 to form a pressure difference between inner and outer layers of the battery housing 41, and the pressure difference of the negative pressure suction is used to further expand the opening 414 in a body of the battery housing 41. After the negative pressure suction is completed, the electrolyte is filled. In this way, it is ensured that each pouch battery is soaked in the electrolyte, thereby integrating the inside of the battery cell 42 with the internal environment of the battery box 43. It is further ensured that each battery cell 42 has not only the same electrical properties (guaranteed by the pre-test grouping), but also the same working environment and the environment in which the electrolyte is soaked. In this way, the consistency of the electrical properties and working conditions of all the battery cells is ensured, thereby greatly prolonging the service life of large-capacity battery.

After the large-capacity battery operates normally, under the combined effect of temperature rise expansion and inside gas production, a channel of the strip hole is further unblocked, thereby integrating the inside of the battery cell 42 with the internal environment of the battery box 43. The positions, lengths, and depths of the openings 414 in the plurality of single batteries 42 may be kept consistent. After negative pressure suction and electrolyte injection, when the large-capacity battery is placed, it is necessary to ensure that the opening 414 of each pouch battery is located at the lowest position of the battery cavity, so that each pouch battery may be fully soaked in the electrolyte.

### Embodiment 10

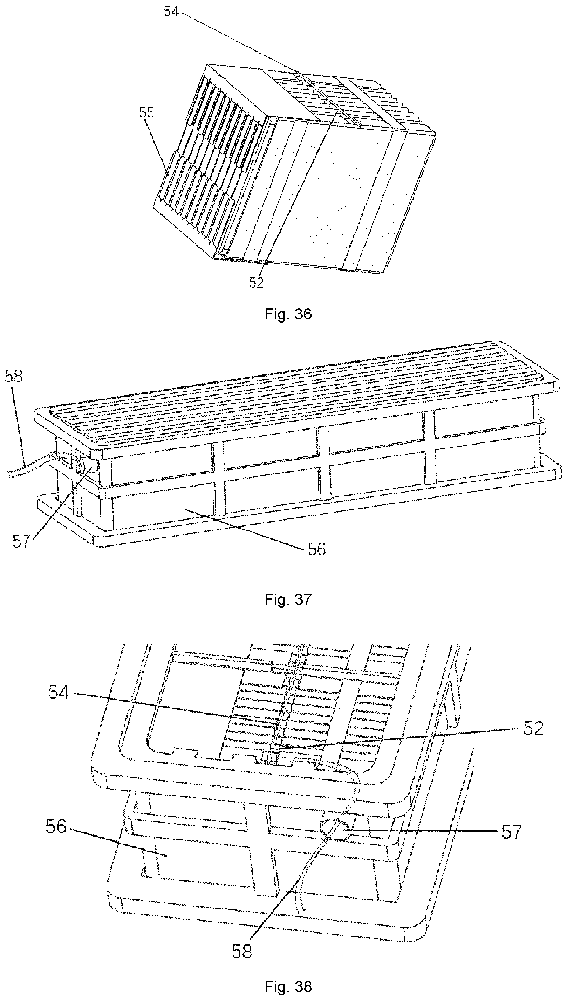

As shown in Fig. 35 to Fig. 38, the present embodiment provides a battery housing, including a casing body 51, a hot melt layer 52, and a heating apparatus 54. The casing body 51 is provided with an opening 53 communicating with an inner cavity thereof, the hot melt layer 52 seals the opening 53, and when the hot melt layer 52 is melted by heat, the opening 53 is opened, so that an electrolyte is injected through the opening. In the present embodiment, the hot melt layer 52 is a hot melt tape, which is bonded to the opening 53 and covers the opening 53. The material of the hot melt tape is polypropylene, with a melting point of 189°C, and softens when the temperature reaches 155°C; or, the material of the hot melt tape is polyethylene, with a melting point of 135°C, and softens when the temperature reaches 125°C. In the present embodiment, the heating apparatus 54 is a heating wire or a heater band, the heating wire is arranged at a center line of the hot melt tape, the heater band is tightly attached to the hot melt tape, the heating wire or the heater band is connected to an external power source through a conductive wire 58, the heating wire or the heater band heats when powered on and conducts heat to the hot melt tape, and when the temperature reaches the melting point of the hot melt tape, the hot melt tape is melted and the opening 53 is opened. It is to be noted that the heating apparatus 54 in the present embodiment may also be a heating sheet according to actual needs.

In the present embodiment, by arranging the heating apparatus 54, the hot melt layer 52 is melted to open the opening 53 of the battery housing, so that the electrolyte in the battery and the electrolyte in the battery cell are circulated with each other, thereby making the performance of the electrolyte inside the entire battery uniform and consistent, and facilitating electrolyte replenishing after precharge and grading of the battery. The operation is simple and the operability is strong.

The present embodiment shows a battery cell, including the above battery housing, an electrode assembly 55, and an electrolyte. The electrode assembly 55 is placed in the battery housing and soaked in the electrolyte.

The present embodiment shows a large-capacity battery, including a plurality of battery cells and a battery box 56. The battery cells are arranged in the battery box 56. When the large-capacity battery is assembled by using the plurality of battery cells, the electrolyte in the battery box 56 and the electrolyte in the battery cell is able to be circulated with each other, so that the performance of the electrolyte inside the entire large-capacity battery is uniform and consistent, electrolyte replenishing after precharge and grading of the battery is also facilitated, the service life of the battery is prolonged, the operability is strong, economy and practicability are achieved, and the production efficiency and yield rate of the battery are improved. The battery box 56 is provided with an electrolyte injection and explosion venting port 57, and the electrolyte injection and explosion venting port 57 is provided with an explosion venting valve. The heating apparatus 54 is heated by an external power supply whose conductive wire 58 passes through the electrolyte injection and explosion venting port 57. During electrolyte injection or electrolyte replenishing of the battery, the electrolyte is injected from the electrolyte injection and explosion venting port 57; and when thermal runaway occurs, the explosion venting valve is opened, and the electrolyte and the gas generated by the thermal runaway may be discharged from the electrolyte injection and explosion venting port 57 to prevent the battery from burning or exploding.

The present embodiment shows a method for sharing an electrolyte in a battery, including the following steps that: at S100, seven pouch cells are connected in parallel to form a pouch cell group to be placed in the battery box 56, and then the conductive wire 58 of the heating apparatus 54 is led out through the electrolyte injection and explosion venting port 57 and connected to the external power supply. It is to be noted that the number of pouch cells may be adjusted according to the requirements for the battery capacity. In the present embodiment, the heating apparatus 54 is a heating wire, and the conductive wire 58 is of a soft structure, which may be led out from the electrolyte injection and explosion venting port 57. At S200, the heating apparatus 54 is powered on to generate heat and conduct the heat to the hot melt layer 52, and the hot melt layer 52 is at least partially melted. In the present embodiment, the hot melt layer 52 is a hot melt tape, which is bonded to the opening 53 and covers the opening 53. The material of the hot melt tape is polyethylene, with a melting point of 135°C, and softens when the temperature reaches 125°C. At S300, the conductive wire 58 and the heating apparatus 54 are pulled out from the electrolyte injection and explosion venting port 57. It is to be noted that the heating apparatus 54 and the hot melt layer 52 adhered to the heating apparatus 54 may be pulled out together through the conductive wire 58, so that the opening 53 of the battery housing is opened. At S400, the electrolyte is injected into the battery box 56 through the electrolyte injection and explosion venting port 57, so that the electrolyte in the battery box 56 and the electrolyte in the pouch cell are circulated with each other. At S500, the explosion venting valve is mounted at the electrolyte injection and explosion venting port 57. It is to be noted that after the explosion venting valve is mounted, the battery as a whole is in a sealed state.

According to the method, the electrolyte in the battery box 56 and the electrolyte in the pouch cell may be circulated with each other to achieve electrolyte sharing, so that the performance of the electrolyte inside the entire battery is uniform and consistent, electrolyte replenishing after pre-charge and grading is also facilitated, the service life of the battery is prolonged, the operability is strong, economy and practicability are achieved, and the production efficiency and yield rate of the battery are improved.

## Claims

1. A battery housing, wherein the battery housing is provided with a sealing mechanism and an opening communicating with an inner cavity of the battery housing, the sealing mechanism seals the opening, and the sealing mechanism is able to be opened by an external force.

2. The battery housing as claimed in claim 1, wherein the sealing mechanism comprises a sealing part and a pulling part, wherein the sealing part is arranged corresponding to the opening in a sealed manner; the pulling part is connected to a side surface of one side, away from the opening, of the sealing part; and when the pulling part is pulled by an external force, the sealing part is integrally separated from the opening, or an opening is formed in the sealing part.

3. The battery housing as claimed in claim 2, wherein the sealing part is provided with a circle of notches, an area circled by the notches is a weak area, and the weak area is provided with the pulling part; and when the pulling part is pulled by an external force, the weak area is torn along the notches to form an opening.

4. The battery housing as claimed in claim 3, wherein the weak area is drop-shaped, circular, or racetrack-shaped; and a cross section of the notch is U-shaped or V-shaped, the weak area is located at a center of the sealing part, and the pulling part is eccentrically arranged on the weak area.

5. The battery housing as claimed in claim 4 wherein the battery housing is provided with a pipeline extending in a thickness direction of the battery housing, and the pipeline covers the opening.

6. The battery housing as claimed in claim 2, wherein the battery housing comprises an upper cover plate, a lower cover plate, and a cylinder, wherein the upper cover plate is provided with a positive terminal and a negative terminal, and the opening is formed in the lower cover plate.

7. The battery housing as claimed in claim 1, wherein the sealing mechanism comprises a fixing part and an electrolyte injection part, wherein the fixing part is of a sheet-shaped structure provided with a through hole, so as to fix the sealing mechanism to the battery housing; and the electrolyte injection part is of a hollow tubular structure provided with an open end and a closed end, the open end is fixed to the through hole, so as to communicate the electrolyte injection part with the inner cavity of the battery housing, and the closed end is opened by an external force to inject the electrolyte into the inner cavity of the battery housing.

8. The battery housing as claimed in claim 7, wherein one side, facing away from the electrolyte injection part, of the through hole is provided with a protruding positioning part, the electrolyte injection part is provided with a weak groove in a circumferential direction thereof, and the weak groove is arranged at one end, away from the fixing part, of the electrolyte injection part.

9. A battery cell, comprising the battery housing as claimed in any one of claims 2 to 8.

10. The battery cell as claimed in claim 9, wherein the battery housing is internally provided with an electrode assembly; and the battery housing is provided with a pipeline, the pipeline extends in a thickness or width direction of the battery cell, a side wall of the pipeline is provided with a channel, and the opening of the battery housing corresponding to the channel is provided with the sealing mechanism.

11. The battery cell as claimed in claim 9, wherein the battery housing is internally provided with a plurality of pouch batteries connected in parallel, and housings of the plurality of pouch batteries are each provided with an opening; and the battery housing is provided with a pipeline, the pipeline extends in a thickness or width direction of the battery cell, a side wall of the pipeline is provided with a channel, and the opening of the battery housing corresponding to the channel is provided with the sealing mechanism.

12. The battery cell as claimed in claim 9, wherein the battery housing is internally provided with a square battery, and a housing of the square battery is provided with an opening; and the battery housing is provided with a pipeline, the pipeline extends in a thickness or width direction of the battery cell, a side wall of the pipeline is provided with a channel, and the opening of the battery housing corresponding to the channel is provided with the sealing mechanism, or the opening of the housing of the square battery is provided with the sealing mechanism.

13. A large-capacity battery, comprising a plurality of battery cells as claimed in any one of claims 9 to 12, wherein a plurality of battery cells are connected in parallel and intercommunication of electrolytes is achieved through a shared pipeline.

14. The large-capacity battery as claimed in claim 13, wherein pipelines on two adjacent battery cells are spliced by a connecting piece to form the shared pipeline, and an inside of the connecting piece is hollow and through.

15. A manufacturing method for the large-capacity battery as claimed in claim 13 or 14, comprising the following steps:
fixing a plurality of battery cells with sealing mechanisms into a group, wherein the plurality of battery cells in the group has a shared pipeline;
using a port at any end of the shared pipeline as an operation port, and opening the sealing mechanisms on all the battery cells by using an unpacking tool, so that the shared pipeline penetrates through inner cavities of all the battery cells; and
injecting an electrolyte into the shared pipeline to allow the electrolyte to enter the inner cavity of each battery cell, so that all the battery cells in the large-capacity battery are located in the same electrolyte system.

16. The manufacturing method for the large-capacity battery as claimed in claim 15, wherein the unpacking tool comprises a slender rod, wherein the slender rod is provided with a cutting part, the cutting part is configured to cut a sealing end of the sealing mechanism, the cutting part is a hollow circular tube with an open end, and the open end of the hollow circular tube is provided with a serrated blade, or the open end of the hollow circular tube is wedge-shaped.

17. The battery housing as claimed in claim 1, wherein the battery housing is enclosed by an upper cover assembly and a housing body, and the housing body is provided with the opening communicating with an inner cavity thereof; the sealing mechanism comprises a connecting pipe and a sealing film, wherein the connecting pipe is arranged on the housing body and communicates with the inner cavity of the housing body through the opening; the sealing film is arranged in the opening of the housing body or in the connecting pipe to seal the battery housing; and the sealing film is opened by an external force or external pressure in the connecting pipe, so that an electrolyte enters the housing body.

18. The battery housing as claimed in claim 17, wherein the connecting pipe is internally provided with an opening apparatus, and the opening apparatus can move in the connecting pipe under the action of external pressure or a sliding apparatus, so that the opening apparatus opens the sealing film.

19. The battery housing as claimed in claim 18, wherein one end of the opening apparatus is provided with an ejecting protrusion or an ejecting spike, while the other end thereof is provided with a circular truncated cone.

20. The battery housing as claimed in claim 19, wherein a side wall of the circular truncated cone of the opening apparatus is provided with a wedge surface, the wedge surface is configured to cooperate with the sliding apparatus, a side wall of one end, away from the opening, of connecting piece is provided with a plurality of through holes in a circumferential direction for circumferential injection of the electrolyte, and the opening apparatus is internally provided with a through channel in a moving direction thereof.

21. A battery cell, comprising an electrode assembly and the battery housing as claimed in any one of claims 17 to 20, wherein the electrode assembly is arranged in the battery housing and is soaked in an electrolyte.

22. A large-capacity battery, comprising an electrolyte storage pipe and a plurality of battery cells as claimed in claim 21, wherein the electrolyte storage pipe communicates with connecting pipes of a plurality of battery housings, the electrolyte storage pipe is internally provided with a sliding apparatus, the sliding apparatus is a sliding rod, and the sliding rod is configured to push an opening apparatus to slide in the connecting pipes, so that the opening apparatus opens a sealing film.

23. The large-capacity battery as claimed in claim 22, wherein the electrolyte storage pipe is provided with an electrolyte injection apparatus, the electrolyte injection apparatus is an electrolyte injection valve, and the electrolyte storage pipe is further provided with an explosion venting apparatus to discharge flue gas generated when thermal runaway of the large-capacity battery is out of control.

24. The battery housing as claimed in claim 1, wherein the sealing mechanism comprises a sealing layer and a magnetic apparatus, wherein the sealing layer is arranged on a housing body of the battery housing and seals the opening; the magnetic apparatus is connected to the sealing layer and is located on one side, away from the housing body, of the sealing layer; and when the magnetic apparatus is attracted by a magnetic piece, at least part of the sealing layer is separated from the housing body, and the opening is opened, so that an electrolyte is injected through the opening.

25. The battery housing as claimed in claim 24, wherein the sealing layer is connected to the housing body through an adhesive, or the sealing layer is a self-adhesive tape.

26. The battery housing as claimed in claim 24, wherein the magnetic apparatus is a magnetic rod, which is connected to the sealing layer by winding, or the magnetic apparatus is a magnetic block, which is fixedly connected to the sealing layer by bonding.

27. The battery housing as claimed in claim 1, wherein the sealing mechanism is a hot melt layer, a housing body of the battery housing is provided with the opening communicating with an inner cavity thereof, the hot melt layer seals the opening, the hot melt layer is provided with a heating apparatus, and when the hot melt layer is melted by heat, the opening is opened, so that an electrolyte is injected through the opening.

28. The battery housing as claimed in claim 27, wherein the heating apparatus is one of a heating wire, a heating plate, or a heater band, the heating apparatus is connected to an external power source through a conductive wire, and the hot melt layer is a hot melt tape.

29. A battery cell, comprising an electrode assembly, an electrolyte, and the battery housing as claimed in any one of claims 24 to 28, wherein the electrode assembly and the electrolyte are both arranged in the battery housing, and the electrode assembly is soaked in the electrolyte.

30. A large-capacity battery, comprising a battery box and a plurality of battery cells as claimed in claim 29, wherein the battery cells are arranged in the battery box, and an electrolyte in the battery box and an electrolyte in a battery housing are circulated with each other through an opening.

31. The large-capacity battery as claimed in claim 30, wherein the battery box is provided with an electrolyte injection and explosion venting port, and the electrolyte injection and explosion venting port is provided with an explosion venting valve.
